Europäisches Patentamt

European Patent Office

Office européen des brevets

(19)

(11) **EP 0 804 029 A2**

(12) **EUROPEAN PATENT APPLICATION**

(43) Date of publication:
29.10.1997 Bulletin 1997/44

(51) Int. Cl.$^6$: **H04N 7/00**, H04N 5/44

(21) Application number: 97106840.8

(22) Date of filing: 24.04.1997

(84) Designated Contracting States:
**DE FI FR GB NL**

(30) Priority: 26.04.1996 JP 130680/96

(71) Applicant: **SONY CORPORATION**
**Tokyo (JP)**

(72) Inventors:
• **Tatehira, Yasushi**
**Shinagawa-ku, Tokyo (JP)**

• **Senda, Tetsuya**
**Shinagawa-ku, Tokyo (JP)**
• **Kita, Hiroyuki**
**Shinagawa-ku, Tokyo (JP)**

(74) Representative: **Müller, Frithjof E., Dipl.-Ing. et al**
**Patentanwälte**
**MÜLLER & HOFFMANN,**
**Innere Wiener Strasse 17**
**81667 München (DE)**

(54) **Video signal processing apparatus**

(57)    Extracting circuit for extracting the reinforcement signal from the received broadcasting signal; an input unit for inputting the video signal of the main picture portion and the extracted reinforcement signal; multiplexing circuit for multiplexing the reinforcement signals of a plurality of lines to one line by a dot-sequencing process on a pixel unit basis; interleaving circuit for performing an interleaving process by using the multiplexed reinforcement signal and the video signal of the main picture portion; and vertical filtering processing circuit for smoothing a continuity in the vertical direction of the interleaved video signal.

*Fig. 2*

EP 0 804 029 A2

## Description

### BACKGROUND OF THE INVENTION

#### Field of the Invention

The invention relates to video signal processing apparatus which are suitable when they are used for allowing a television signal such that a scanning line interpolating process is performed by using a vertical resolution reinforcement signal to be displayed on a display such as computer monitor or flat display in which the number of effective scanning lines is limited.

#### Description of the Related Art

In recent years, new media of a radio system and a wire system have progressively proposed by the remarkable development of electric communication techniques. For example, in a television broadcast, a high picture quality and a wide screen are realized in a frequency band, for example, 6 MHz of one channel while keeping compatibility with the existing broadcast. It is a large feature that as compared with the existing broadcasting system, the screen is a laterally long wide screen whose aspect ratio (ratio of lateral and vertical lengths of the screen) is equal to (16 : 9). For example, in Europe, for the PAL (Phase Alternation by Line) system as an existing broadcasting system, a broadcast by the PALplus system is being put into practical use as a next generation television broadcasting system through an experimental broadcast.

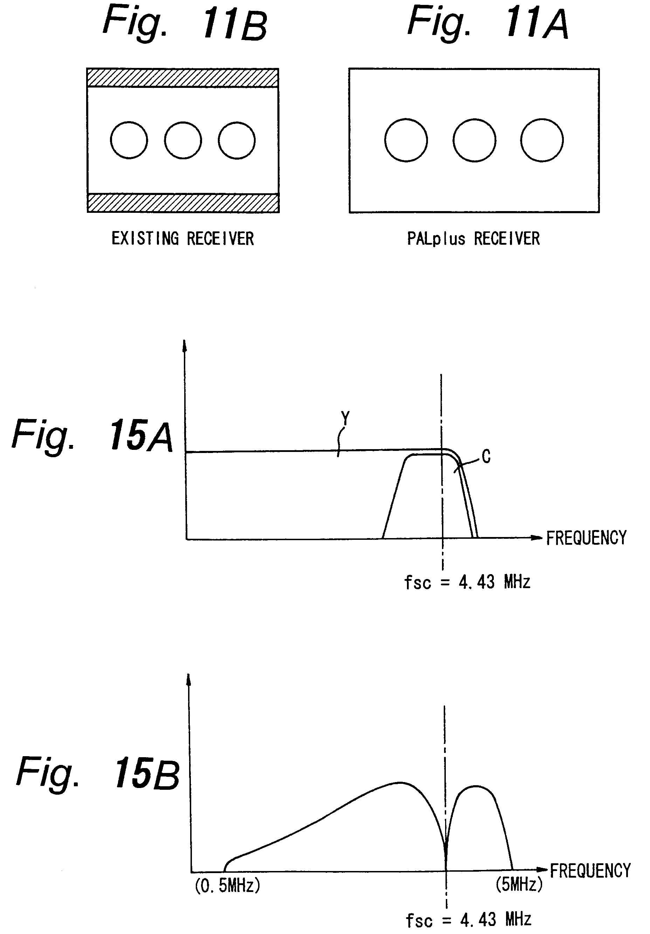

Figs. 11A and 11B show an example of an image received by the PALplus system. Fig. 11A shows a state in which a video image broadcasted by the PALplus system is displayed by an existing television receiver of a screen whose aspect ratio is equal to (4 : 3). In the existing television receiver in which a decoder of the PALplus is not equipped and whose aspect ratio is equal to 4 : 3, a picture plane in which non-picture portions are arranged in the upper and lower positions of a main picture portion is obtained as shown in Fig. 11A. This is because in the PALplus system, a signal has been transmitted in a letter box format. When such a video image is displayed by a television receiver having the decoder corresponding to the PALplus, the picture plane is displayed as shown in Fig. 11B, so that a wide picture plane can be enjoyed.

The signal format of the PALplus system is set to a signal of 625/50/2:1 (interlace) . The main picture portion is obtained by a method whereby pixels of the 625-line (576 effective scanning lines) sequential scan are converted into a signal of 430 effective scanning lines by a 4-3 scanning line conversion and, after that, the signal is converted to an interlace scan by performing a predetermined vertical low-pass filtering process. In this instance, since the signal has been 4-3 converted, a vertical resolution deteriorates. Therefore, in order to reinforce the deteriorated vertical resolution, a vertical resolution reinforcement signal is transmitted. Although explanation will be made hereinlater, a signal in which the vertical resolution reinforcement signal has been demodulated and an amplitude has been limited on the reception side is called a helper signal.

In the PALplus system, there are two kinds of signal processing modes of "camera mode" which treats a television camera image or the like and "film mode" which treats a movie film image or the like in accordance with a kind of signal source. The camera mode is set to 50 fields per second and the film mode is set to 25 fields per second. Therefore, a signal process is performed on a field unit basis in the camera mode, while in the film mode, since an image is not moved between two fields constructing one frame, a signal process is executed on a frame unit basis.

The PALplus system needs to satisfy all of the following three conditions.

The first condition is to execute a vertical conversion to the letter box format. An original image in which the number of effective scanning lines is equal to 576 and an aspect ratio is set to 16 : 9 is converted into the letter box format in which the number of scanning lines is equal to 430 and an aspect ratio is equal to 16 : 9. In this instance, a QMF (Quadrature Mirror Filter) conversion is performed and a vertical resolution reinforcement signal of a luminance signal Y is obtained. The vertical resolution reinforcement signal of the luminance signal Y is multiplexed to upper and lower non-picture portions and is transmitted. The vertical conversion is executed on a field unit basis in the above camera mode and is carried out on a frame unit basis in the film mode.

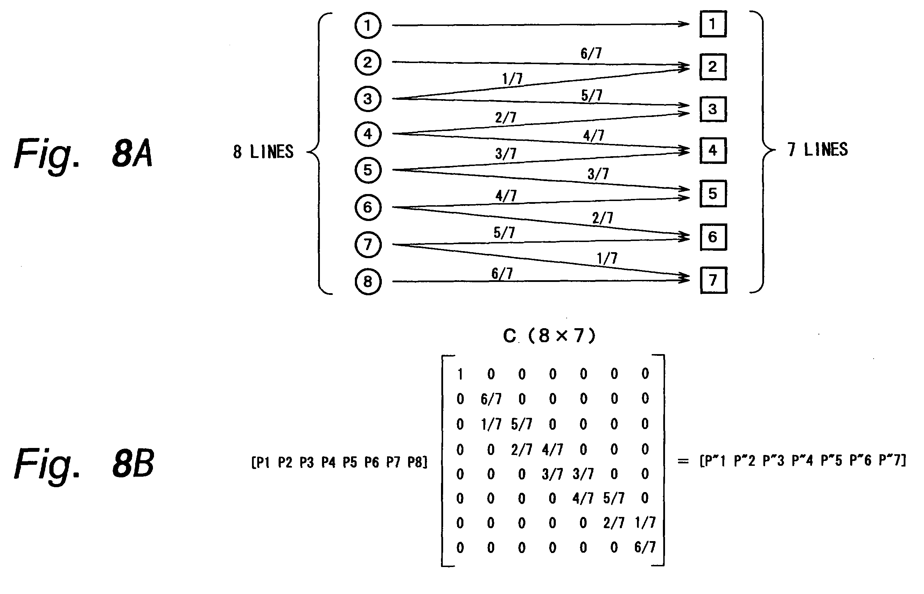

The second condition is to execute a modulation of the helper signal. A color subcarrier is modulated by the vertical resolution reinforcement signal derived by the above QMF conversion. Upon modulation, a level limitation and a horizontal band limitation are performed to the vertical resolution reinforcement signal. The level limitation is also performed upon transmission. Fig. 8 shows an example of the vertical resolution reinforcement signal and a signal of a main picture portion. In the camera mode, scanning line interpolating process using the helper signal is indispensable. On the other hand, in the film mode, scanning line interpolating process is dispensable.

The third condition relates to a motion adaptive color plus process. It is called an MACP (Motion Adaptive Color Plus) and is an encoding process which is executed for suppression of a crosstalk interference between the luminance signal Y and a chrominance signal C and improvement of a horizontal resolution of the luminance signal. In the camera mode, a region (motion region) in a picture plane where the chrominance signal is moving and a still region are discriminated. In the PALplus signal, although the luminance signal Y has a band width of 5 MHz, in the motion region, the band width is band limited to 3 MHz and, in the still region, the whole band of 5 MHz is sent. On the reception side, the process is switched on the basis of a discrimination result of the motion region and the still region. In the film mode in which the process is executed on a 1-frame unit basis, since a video image is not moved between fields constructing one frame, the process for the still region in the camera mode is fixedly performed. However, motion adaptive color plus process is dispensable.

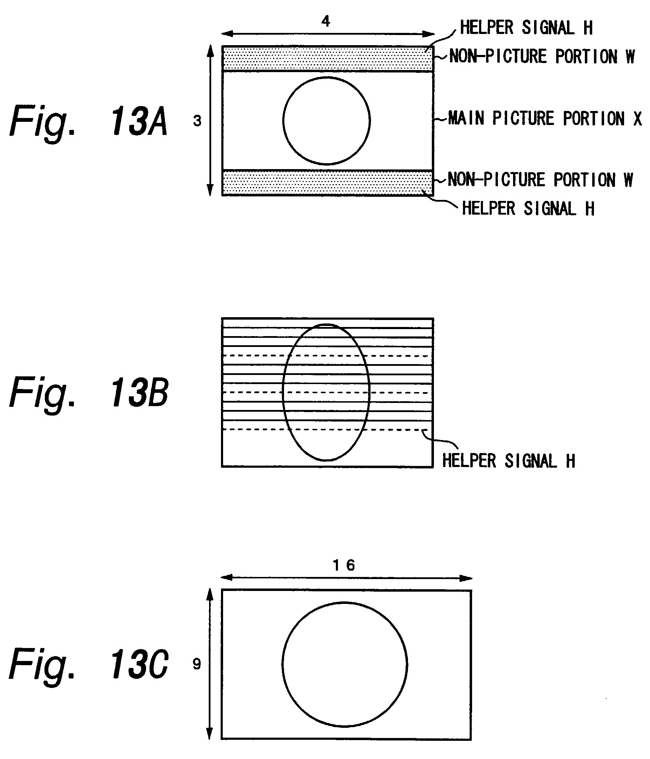

Figs. 13A, 13B and 13C schematically show a scanning line interpolation by the PALplus system. As shown in Fig. 13A, a broadcasting signal by the PALplus system (hereinafter, abbreviated as a PALplus signal) is constructed by a main picture portion X and non-picture portions W arranged at upper and lower positions of the main picture portion X. A helper signal H is multiplexed to the non-picture portions W. In the television receiver corresponding to the PALplus system, in order to demodulate the PALplus signal of such a construction, an interleaving process using a memory is carried out.

As shown in Fig. 13B, namely, for the screen whose aspect ratio is equal to 4 : 3, scanning lines of the main picture portion X of three lines such as first to third lines are outputted and a scanning line of one line to which the helper signal H was multiplexed is inserted. Subsequently, an interleaving process such that three scanning lines of the main picture portion X and the scanning line to which the helper signal H was multiplexed are alternately inserted is likewise executed. Therefore, at this stage, as shown in the diagram, an image in which the inherent image is extended in the vertical direction is obtained.

The image which was interleave processed is filtering processed and also extended in the side direction in order that the aspect ratio is equal to 16 : 9 by a vertical filter. By the process, as shown in Fig. 13C, a wide image of an aspect ratio of 16 : 9 is reconstructed. Namely, in the television receiver corresponding to the wide screen of the aspect ratio of 16 : 9, a wide image of the aspect ratio of 16 : 9 can be reproduced by the above process. In the television receiver of the conventional screen whose aspect ratio is set to 4 : 3, the conventional image of the aspect ratio of 4 : 3 as shown in Fig. 13A is reproduced as it is.

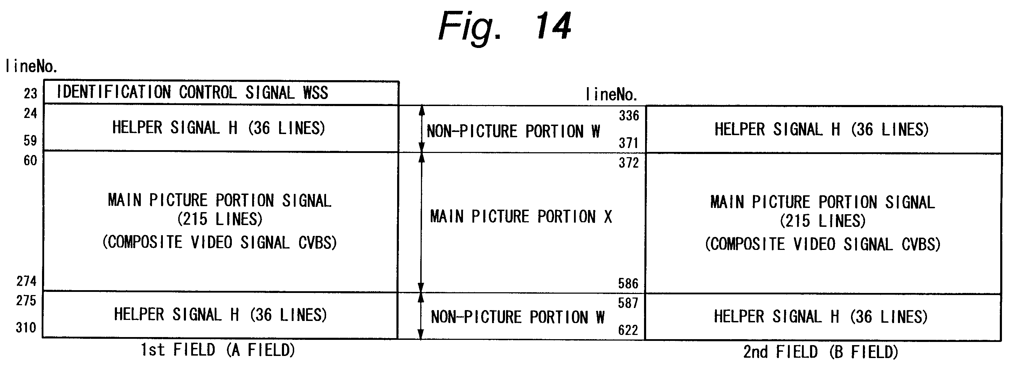

Fig. 14 shows the details of a frame construction according to the PALplus system. The first field is constructed by the main picture portion X consisting of 215 lines and non-picture portions H which exist at the upper and lower positions of the main picture portion X and each of which consists of 36 lines. A WSS (Wide Screen Signaling) serving as a PALplus signal, foregoing mode signal, and an ID control signal to detect the presence or absence of a 3-dimensional precombing or the like is interposed in the 23rd line in the non-picture portion. In the main picture portion X of the PALplus signal, a composite video signal comprising scanning lines of 215 lines per field is transmitted at the aspect ratio of 16 : 9. In the non-picture portions H which are arranged at the upper and lower positions of the main picture portion X and each of which consists of 36 scanning lines, the helper signals are transmitted. The second field is also constructed in a manner similar to the first field.

In the television receiver corresponding to the PALplus system, an interpolating process is performed upon reproduction of the PALplus signal, so that an image of a higher quality is derived. Namely, an image of 16 : 9 consisting of the scanning lines of 287 lines per field is derived from the signals of total 287 lines of the luminance signal (215 lines/field) of the main picture portion X and the helper signals H (72 lines/field for the upper and lower helper signals). With respect to a color difference signal, an image of 16 : 9 consisting of the scanning lines of 287 lines per field is obtained from only the color difference signal (215 lines/field) of the main picture portion.

Such an interpolating process is executed on a frame unit basis in principle. In this instance, in case of the motion image by the foregoing camera mode in which images in the first field (hereinafter, referred to as an "A field") and the second field (hereinafter, referred to as a "B field") largely differ in one frame, if the process is carried out on a frame unit basis, a picture quality largely deteriorates. Therefore, in the PAL plus system, the mode signal of one bit indicative of a correlation between those two fields is multiplexed to the WSS and the camera mode and the above film mode are distinguished, thereby allowing the interpolating process to be certainly performed. Namely, in the film mode, since the images of the A field and B field are the same, an intraframe interpolation is executed by using the images of the A and B fields in the same frame. In the camera mode, an intrafield interpolation is carried out by using the video signal of one field.

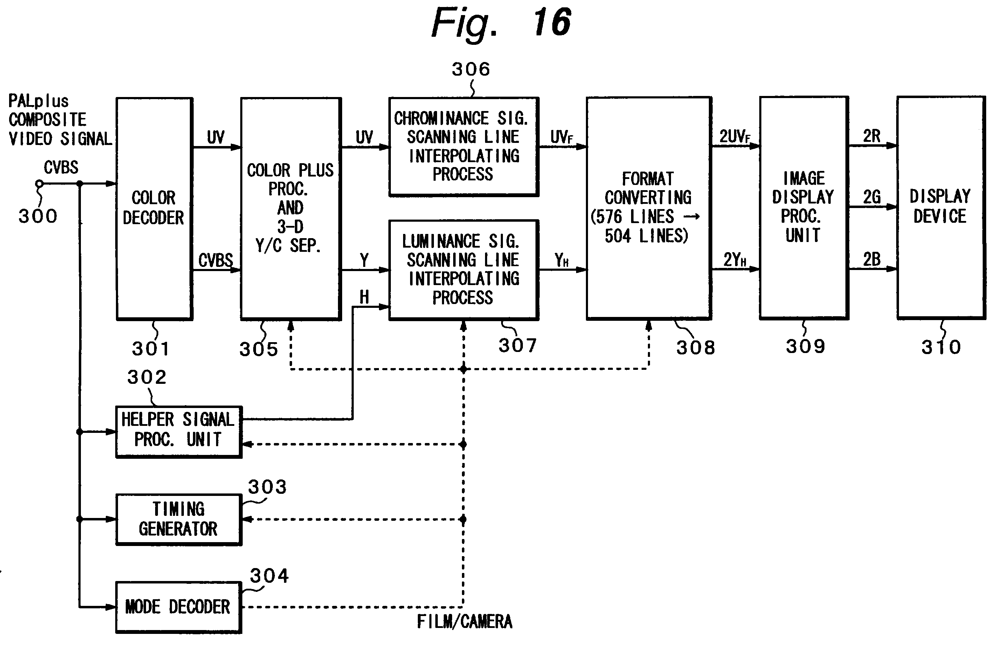

Fig. 15A shows signal spectra of the luminance signal Y and carrier chrominance signal C according to the PALplus system. The C signal modulated by a color subcarrier frequency of 4.43 MHz is frequency multiplexed to the Y signal. Fig. 15B shows a signal spectrum of the helper signal and this signal has also been modulated by the color subcarrier frequency of 4.43 MHz and has a band of about 0.5 to 5 MHz.

On the other hand, in recent years, a flat display technique has been developed and a television receiver using it is being developed. As a flat panel display used in such a television receiver, for example, there are a liquid crystal panel (LCD) and a plasma display. In such a flat panel display, the number of scanning lines which can be displayed is fixed in terms of a structure of the panel. For example, in the display of the computer screen, a VGA (Video Graphic Array) in which the number of effective scanning lines is equal to 480 is actually a standard. The number of effective scanning lines of the television signal by the NTSC system is also equal to 480. In the flat panel display, therefore, a system in which the number of effective scanning lines is equal to 480 is becoming a standard system.

Therefore, in order to display a video image by the PALplus system mentioned above to such a flat panel display, the number of effective scanning lines of the video signal which is supplied to the display needs to be converted, for example, from 576 to 480.

As a converting method, for instance, there are a method whereby a demodulation PALplus signal in which the number of effective scanning lines is equal to 576 is further format converted to the signal in which the number of effective scanning lines is equal to 480 line and a method of displaying the main picture portion of the letter box format without performing the scanning line interpolating process by the PALplus signal (in this case, the number of effective scanning lines is equal to 432).

Fig. 16 shows an example of a construction of a video image apparatus for demodulating the PALplus signal and allowing an image to be displayed on a display device based on the foregoing VGA standard. A composite video signal CVBS according to the PALplus system is supplied from an input terminal 300. The signal CVBS is supplied to a color decoder 301, a helper signal processing unit 302, a timing generator 303, and a mode decoder 304.

The signal CVBS supplied to the color decoder 301 is subjected to a process to extract a band including a color carrier by, for example, a band pass filter and a color demodulation is performed, thereby deriving a color difference signal UV. The color difference signal UV includes line sequenced $C_R$ and $C_B$ components. It is difficult to perfectly separate the band of the luminance signal Y and the band including the color carrier by the band pass filter. Therefore, the component of the luminance signal Y is mixed as a cross color component in the color difference signal UV which was color demodulated. The color difference signal UV including the cross color component and the signal CVBS are respectively supplied to a color plus process and 3-dimensional Y/C separating unit 305 from the color decoder 301, respectively.

In the mode decoder 304, the foregoing WSS multiplexed to the 23rd line of the supplied signal CVBS is extracted and decoded. In this construction, the information based on the WSS is sent to each of the necessary sections. For example, the ID information that is included in the WSS and is used to identify the camera mode and film mode is supplied to the helper signal processing unit 302, timing generator 303, color plus process and 3-dimensional Y/C separating unit 305, a luminance signal scanning line interpolation processing unit 307, and a format converting unit 308.

The timing generator 303 generates various timing signals based on, for example, a horizontal sync signal included in the supplied signal CVBS. Although not shown, the timing signal is supplied to each section in the above construction.

In the helper signal processing unit 302, a demodulation and an amplitude adjustment of the vertical resolution reinforcement signal which is modulated by the color carrier signal and transmitted in the upper and lower non-picture portions of the supplied signal CVBS are executed, so that the foregoing helper signal H is derived. The helper signal H is supplied to the luminance signal scanning line interpolation processing unit 307 for the scanning line interpolating process.

In the color plus processing and 3-dimensional Y/C separating unit 305, a filtering process by a 3-dimensional filter using a field memory corresponding to 3-dimensional precombing characteristics on the transmission side is executed to the supplied signal CVBS, so that the luminance signal Y is extracted. The extracted luminance signal Y is supplied to the luminance signal scanning line interpolation processing unit 307. A similar filtering process is also executed to the supplied color difference signal UV and the mixed cross color component is removed. The color difference signal UV from which the cross color component was removed is supplied to a chrominance signal scanning line interpolation processing unit 306.

In the luminance signal scanning line interpolation processing unit 307, a scanning line interpolating process by the helper signal H is performed on the basis of the ID signal supplied from the mode decoder 304 and the timing signal supplied from the timing generator 303. In the scanning line interpolating process, the main picture portion in which the number of scanning lines is set to 215 lines per field is combined to the luminance information which the upper and lower helper signals H of total 72 lines which were transmitted and supplied in the non-picture portions and is converted into the luminance signals $Y_H$ of 287 lines.

In the chrominance signal scanning line interpolation processing unit 306, an intrafield scanning line interpolating process is executed. By this process, the scanning lines of the main picture portion in which the number of scanning lines is equal to 215 lines per field is converted to 287 lines of the number that is 4/3 times as large as 215, so that a color difference signal $UV_F$ is obtained.

The luminance signal $Y_H$ and color difference signal $UV_F$ which were respectively interpolation processed by the luminance signal scanning line interpolation processing unit 307 and chrominance signal scanning line interpolation processing unit 306 are supplied to the format converting unit 308, respectively. In the format converting unit 308, a format conversion is performed by a predetermined method to the supplied luminance signal $Y_H$ and color difference signal $UV_F$ and the number of scanning lines is converted. The scanning lines of the luminance signal $Y_H$ and color difference signal $UV_F$ which have the scanning lines of 287 lines per field and in which the aspect ratio is set to 16 : 9 are converted into, for instance, 252 lines per field (namely, 504 lines per frame). By such a conversion, the video image is converted to an image suitable for displaying on the flat panel display of the VGA standard in which the number of scanning lines is equal to 480 lines.

The luminance signal $Y_H$ and color difference signal $UV_F$ in which the number of scanning lines was converted are supplied to an image display processing unit 309 and are converted into a signal format suitable for allowing an image to be displayed by a display device 310. In this example, signals of three primary colors comprising RGB are formed from the luminance signal $Y_H$ and color difference signal $UV_F$. Those signals are supplied to the display device 310 comprising, for example, a liquid crystal display (LCD) and its driving unit and a corresponding image is displayed.

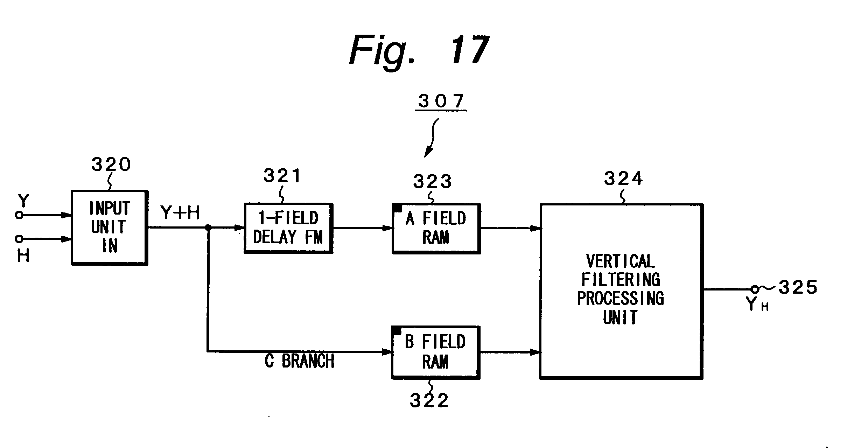

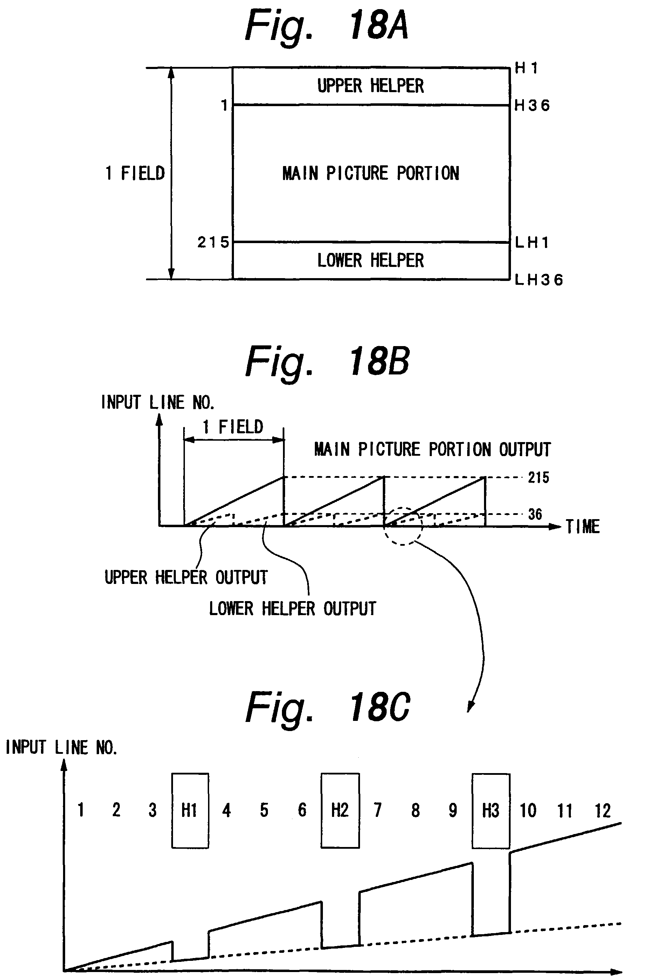

Fig. 17 schematically shows an example of a construction of the foregoing luminance signal scanning line interpolation processing unit 307. Figs. 18A to 18C schematically show the interpolating process (interleaving process) in the interpolation processing unit 307. The luminance signal Y and helper signal H are supplied to an input unit 320, respectively. In the input unit 320, the helper signal H are multiplexed to the upper and lower non-picture portions of the luminance signal Y and are converted into a digital signal of, for example, 8 bits by an A/D conversion, thereby obtaining a digital luminance signal Y + H.

As mentioned above, the ID signal based on the WSS is supplied from the mode decoder 304 to the luminance signal scanning line interpolation processing unit 307. The process in the camera mode and film mode in the luminance signal scanning line interpolation processing unit 307 is switched by the ID information of the film mode and camera mode included in the supplied ID signal.

In the film mode, the luminance signal Y + H from the input unit 320 is supplied to a 1-field delay field memory (hereinafter, abbreviated to a 1-field delay FM) 321 and is written into a B field RAM 322. The digital luminance signal Y + H supplied to the 1-field delay FM 321 comprising, for example, an FIFO memory is delayed by a time of one field and is written into an A field RAM 323.

For instance, a dual port RAM in which the reading operation can be performed in parallel with the writing operation is used as an A field RAM 323 and a B field RAM 322.

In the A field RAM 323 and B field RAM 322, when data is read out, the interleaving process as mentioned above is executed. Fig. 18A shows a definition of input line numbers which are used in the following description. As mentioned above, in the following description, the helper signals of the upper non-picture portion are set to H1, H2, ..., and H36 from the top, while the helper signals of the lower non-picture portion are set to LH1, LH2, ..., and LH36 from the top. With respect to the main picture portion, the first to 215th lines are simply set.

In the digital luminance signal Y + H written in the RAMs 322 and 323, as for the luminance signal Y arranged in the main picture portion, the data is sequentially read out from the first line of the main picture portion toward the 215th line. In parallel with it, as shown by broken lines in Fig. 18B, the helper signal H multiplexed to the upper non-picture portion is sequentially read out from H1 to H36. Subsequently, the helper signal H multiplexed to the lower non-picture portion is sequentially read out from LH1 to LH36. Fig. 18C enlargedly shows a portion surrounded by a circle in Fig. 18B mentioned above. As shown in the diagram, the first, second, and third lines of the luminance signal Y are read out and H1 of the helper signal H is read out. Subsequently, the fourth, fifth, and sixth lines of the signal Y are read out and H2 of the helper signal H is read out. In this manner, the helper signal H of one line is multiplexed to the luminance signals Y of three lines and is interleave processed. This process is common to the A field RAM 323 and B field RAM 322.

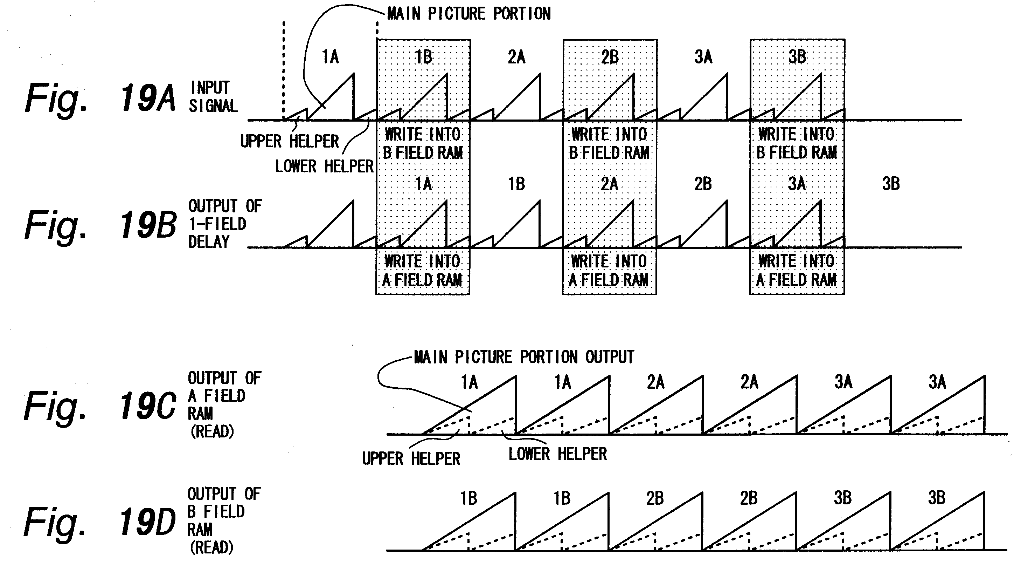

Figs. 19A to 19D show a memory control in the film mode in the A field RAM 323 and B field RAM 322. On the basis of Figs. 19A to 19D, a writing and reading method of the luminance signal Y + H will now be described. Fig. 19A shows the luminance signal Y + H which is supplied from the input unit 320 to the B field RAM 322 and the A field RAM 323. As shown in the diagram, the signal of the A field (first field) of the first frame first arrives at the B field RAM 322 and the signal of the B field (second field) of the same frame subsequently arrives. Next, the A field and B field of the second frame, the third frame, ..., arrive at the B field RAM 322. In this instance, the data of each field arrives in accordance with the order of the upper helper signals H1 to H36, the first to 215th lines of the luminance signal Y of the main picture portion, and the lower helper signals LH1 to LH36.

Fig. 19B shows the luminance signal Y + H which is outputted from the 1-field delay FM 321 and is written into the A field RAM 323. The timing of the luminance signal Y + H is delayed by a time of one field by the 1-field delay FM 321. Therefore, the A field of the first frame arrives at the A field RAM 323 at the timing when the B field of the first frame arrives at the B field RAM 322. After that, the luminance signal Y + H arrives at the A field RAM 323 at timings which are deviated by a time of one field for the arrival at the B field RAM 323 in a manner such as B field of the first frame, A field of the second frame, .... In this instance, the data of each field arrives in accordance with the order of the upper helper signal H, luminance signal Y of the main picture portion, and the lower helper signal H.

Only when the signals of the A field and B field of the same frame simultaneously arrive at the A field RAM 323 and B field RAM 322, the helper signal H and luminance signal Y are written into the A field RAM 323 and B field RAM 322, respectively. An example of the writing timings is shown by hatched regions in the diagram. The signal of the A field is written into the A field RAM 323 at which the signal which was delayed by one field arrives, while the signal of the B field is written into the B field RAM 322.

When the signals of the A and B fields are read out from the A field RAM 323 and B field RAM 322, the foregoing interleaving process is executed. In this instance, the same contents are continuously read out with respect to two fields. Such a state is shown in Figs. 19C and 19D. Namely, as shown in Fig. 19C, the luminance signal Y of the main picture portion is sequentially read out from the A field RAM 323 in accordance with the order from the first to 215th lines and the helper signals H of the upper and lower non-picture portions of one line are read out for the luminance signal Y of three lines. In addition, as shown in Fig. 19D, the B field RAM 322 is read out as well as the A field RAM 323.

In case of the film mode, in order to obtain the A field output and B field output, the contents of the scanning lines of both of the input A field and the input B field are necessary. Therefore, the same contents are read out from the A field RAM 323 and B field RAM 322 with respect to two fields. The signals read out from the A field RAM 323 and B field RAM 322 are respectively supplied to a vertical filtering processing unit 324, respectively.

In the vertical filtering processing unit 324, by performing a vertical filtering process to the signals of two fields supplied, thereby obtaining the necessary luminance signal $Y_H$. The luminance signal $Y_H$ derived is outputted to an output terminal 325.

In the camera mode, the luminance signal Y + H from the input unit 320 is supplied and written to only the B field RAM 322 in accordance with a C branch in Fig. 17. The supplied luminance signal Y + H is interleave processed in the B field RAM 322 and is read out. The read signal is supplied to the vertical filtering processing unit 324 and is outputted as a necessary luminance signal $Y_H$ to the output terminal 325.

As mentioned above, in the luminance signal scanning line interpolation processing unit 307, in order to perform both of the processes in the film mode and camera mode, three field memories such as 1-field delay FM 321, A field RAM 323, and B field RAM 322 are necessary.

Although the processes for the luminance signal have been described here, even in the chrominance signal scanning line interpolation processing unit 306, an almost similar memory management is performed to the supplied color difference signal UV and the scanning line interpolating process is executed. However, the process using the helper signal is not executed.

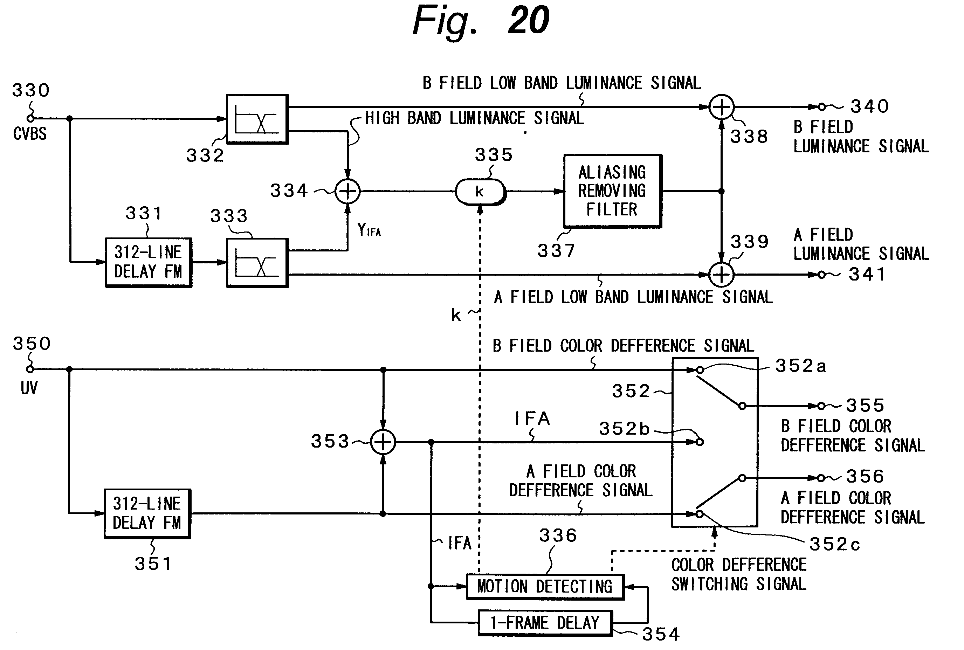

Fig. 20 schematically shows an example of a construction of the foregoing color plus process and 3-dimensional Y/C separating unit 305. The composite video signal CVBS is supplied to an input terminal 330. The signal CVBS is supplied from the input terminal 330 to both of a 312-line delay 331 and a B field band dividing filter 332. The 312-line delay 331 comprises a field memory and delays the supplied signal CVBS by a time of 312 lines and outputs. As is well known, in the PAL/PALplus system, one frame is constructed by 625 lines while including a vertical blanking period. Therefore, the signal CVBS is delayed by a time of only one field in the 312-line delay 331. An output of the 312-line delay 331 is supplied to an A field band dividing filter 333.

The B field band dividing filter 332 has, for example, a low-pass filter and a high-pass filter. In the band dividing filter 332, the signal CVBS is divided into a low frequency region (low band luminance signal) including no color carrier signal and a high frequency region (high band luminance signal) including the color carrier signal. A boundary of the bands between the low frequency region and high frequency region is set to, for example, 3 MHz in case of the composite video signal of the PAL/PALplus system.

On the other hand, the signal CVBS which was delayed by a time of 312 lines by the 312-line delay 331 is supplied to the A field band dividing filter 333 having characteristics similar to those of the above B field band dividing filter 332 and is divided into a low band luminance signal and a high band luminance signal.

The A field low band luminance signal which was band divided by the A field band dividing filter 333 is supplied to one input terminal of an adder 339. Similarly, the B field low band luminance signal which was band divided by the B field band dividing filter 332 is supplied to one input terminal of an adder 338.

The B field high band luminance signal and the A field high band luminance signal which were respectively band divided by the band dividing filters 332 and 333 are supplied to one input terminal and the other input terminal of an adder 334, respectively, and are added. The n-th line which was delayed by a time of 312 lines in the A field and the (n + 312)th line in the B field become the adjacent lines when one frame is constructed by the A and B fields. In the film mode, since the A and B fields are set to the same image, a correlation of the luminance signals between those lines is high. In the PAL/PALplus system, on the other hand, phases of color carrier signals in the lines which are away from each other by 312 lines are different by 180°. Therefore, the color carrier signals included on the high band side of the signal CVBS are set off at the time of supply to the input terminal 330 by the addition in the adder 334. Thus, the Y/C separation is performed.

An intraframe average high band luminance signal $Y_{IFA}$ outputted from the adder 334 is supplied to a coefficient device 335. The coefficient device 335 multiplies a predetermined coefficient k to the supplied signal, thereby limiting a level and an amplitude of the signal. When the composite video signal CVBS supplied to the input terminal 330 is based on an image which severely moves, a harmful component leaks to the intraframe average high band luminance component derived by the addition. To reduce a visibility of an image fault by the harmful component, in the coefficient device 335, the coefficient k according to a motion amount that is sent from a motion detecting unit 336, which will be explained hereinlater, is multiplied to the signal $Y_{IFA}$ supplied, thereby attenuating the amplitude of the signal $Y_{IFA}$.

The signal $Y_{IFA}$ which was adjusted to the amplitude according to the motion amount of the luminance signal by the coefficient device 335 is supplied to an aliasing removing filter 337. In the color plus process and 3-dimensional Y/C separating unit 305, the same high band luminance signal is used over two fields in the supplied signal CVBS, so that a continuity of an oblique line is not smooth. Such a situation is lightened in the aliasing removing filter 337.

The signal $Y_{IFA}$ outputted from the aliasing removing filter 337 is supplied to the other input terminal of the adder 338 and the other input terminal of the adder 339. The adder 338 adds the signal $Y_{IFA}$ and the B field low band luminance signal, thereby obtaining a B field luminance signal. The B field luminance signal is outputted to an output terminal 340. Similarly, the adder 339 adds the signal $Y_{IFA}$ and the A field low band luminance signal, thereby obtaining an A field luminance signal. The A field luminance signal is outputted to an output terminal 341.

A process for the color difference signal UV in the color plus process and 3-dimensional Y/C separating unit 305 will now be described. The color difference signal UV is supplied to an input terminal 350. The supplied color difference signal UV is supplied to a 312-line delay 351, one input terminal of an adder 353, and an input terminal 352a of a color difference output switch 352. The color difference output switch 352 has three inputs and two outputs, selects two outputs among three inputs from the motion detecting unit 336, which will be explained hereinlater, on the basis of a color difference switching signal that is sent in accordance with a motion amount, and supplies to output terminals 355 and 356, respectively.

In a manner similar to the case of the above composite video signal CVBS, the signal which was supplied to the 312-line delay and was delayed by a time of 312 lines is set to the A field color different signal. The signal that is directly supplied to the color difference output switch 352 and adder 353 is set to the B field color difference signal. The A field color difference signal outputted from the 312-line delay is supplied to an input terminal 352c of the color difference output switch 352 and is also supplied to the other input terminal of the adder 353.

The adder 353 adds the A field color difference signal and the B field color difference signal, thereby obtaining an intraframe average color difference signal $C_{IFA}$. In this manner, by adding the color difference signals of the A and B fields in the film mode, in a manner similar to the case of the foregoing intraframe average high band luminance signal $Y_{IFA}$, the luminance component mixed to the color carrier signal can be removed. The signal $C_{IFA}$ outputted from the adder 353 is supplied to an input terminal 352b of the color difference output switch 352.

In the color difference output switch 352, in an ordinary video image which doesn't vigorously move, the input terminals 352a and 352c are selected on the basis of the color difference switching signal which is supplied from the motion detecting unit 336. Therefore, the B field color difference signal is supplied to the output terminal 355 and the A field color difference signal is supplied to the output terminal 356, respectively.

On the other hand, in the case where the color difference signal UV which is supplied relates to a video image which vigorously moves, a harmful component is generated in a manner similar to the case of the signal $Y_{IFA}$. In this case, therefore, on the basis of the color difference switching signal from the motion detecting unit 336, the input terminal 352b is selected in the color difference output switch 352 for both of the two outputs. Therefore, the signal $C_{IFA}$ is outputted to both of the output terminals 355 and 356 and are set to the B field color difference signal and the A field color difference signal, respectively.

A measurement of the motion amount in the motion detecting unit 336 mentioned above will now be described. The intraframe average color difference signal $C_{IFA}$ outputted from the adder 353 is supplied to the input terminal 352b of the color difference output switch 352 and is also supplied to one input terminal of the motion detecting unit 336 and to a 1-frame delay 354. The signal $C_{IFA}$ which was delayed by a time of one frame by the 1-frame delay 354 is supplied to the other input terminal of the motion detecting unit 336.

In the motion detecting unit 336, the attenuation coefficient k for the signal $Y_{IFA}$ and the color difference switching signal for the color difference output switch 352 are formed by using the signal $C_{IFA}$ supplied to one input terminal and the signal $C_{IFA}$ which was supplied to the other input terminal and was delayed by a time of one frame on the basis of an algorithm specified to the specifications of the PALplus system.

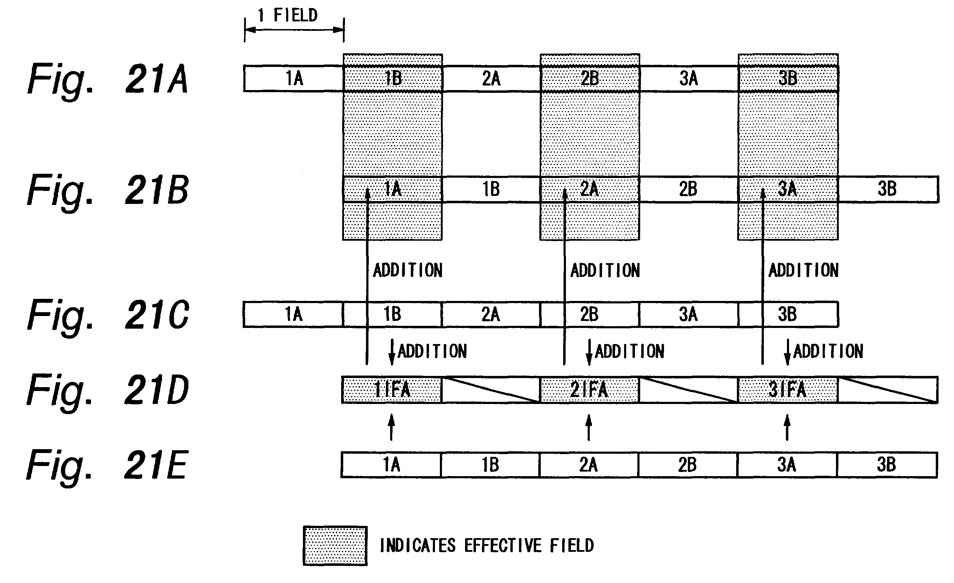

Figs. 21A to 21E show time charts for the color plus signal process in the color plus process and 3-dimensional Y/C separating unit 305. For example, the processes of the luminance signal will now be described. Fig. 21A shows the A field low band luminance signal. Fig. 21B shows the B field low band luminance signal. Fig. 21C shows the B field high band luminance signal. Fig. 21E shows the A field high band luminance signal. Fig. 21D shows the intraframe average high band luminance signal $Y_{IFA}$ outputted from the adder 334. In the example, it is assumed that the luminance signal sequentially arrives in accordance with the order of the A field (1A) and B field (1B) of the first frame, the A field (2A) and B field (2B) of the second frame, the A field (3A) and B field (3B) of the third frame, ....

As mentioned above, the A field high band luminance signal is a signal which is delayed by a time of one field by the 312-line delay 331. In the film mode, the processes using both A and B fields are performed . Therefore, as shown in Fig. 21D, intraframe average high band luminance signal $Y_{IFA}$ is obtained by adding the B field high band luminance signal and the A field high band luminance signal in the same frame which simultaneously arrive at the adder 334. That is, as shown in hatched regions in Fig. 21D, the signal $Y_{IFA}$ is derived every other field.

As shown in Figs. 21A and 21B, at timings when the valid signal $Y_{IFA}$ is derived, the B field low band luminance signal and the A field low band luminance signal in the same frame as that of the signal $Y_{IFA}$ arrive at the adders 338 and 339. In the adders 338 and 339, therefore, the signal $Y_{IFA}$ is added to the B field low band luminance signal and A field low band luminance signal, respectively, so that the B field luminance signal and A field luminance signal of the same frame are derived. Namely, as shown in the hatched regions in Figs. 21A and 21B, the B field luminance signal and A field luminance signal of the same frame are obtained every other field.

The processes for the color difference signal UV in the color plus process and 3-dimensional Y/C separating unit 305 are also executed in a manner similar to the processes for the luminance signals.

As shown in Figs. 21A to 21E, the outputs by the color plus signal process are simultaneously derived from two output lines every other field. Figs. 21A to 21E are compared with the diagram of the memory control in the luminance signal scanning line interpolation processing unit 307 shown in Figs. 19A to 19D mentioned above. It will be, consequently, understood that the processes in the adders 338 and 339 in the color plus process and 3-dimensional Y/C separating unit 305 shown in Figs. 21A and 21B and the processes for the input signal by the 1-field delay FM 321 in the luminance signal scanning line interpolation processing unit 307 shown in Fig. 19A are common. Therefore, the 1-field delay FM 321 can be replaced to the color plus process and 3-dimensional Y/C separating unit 305.

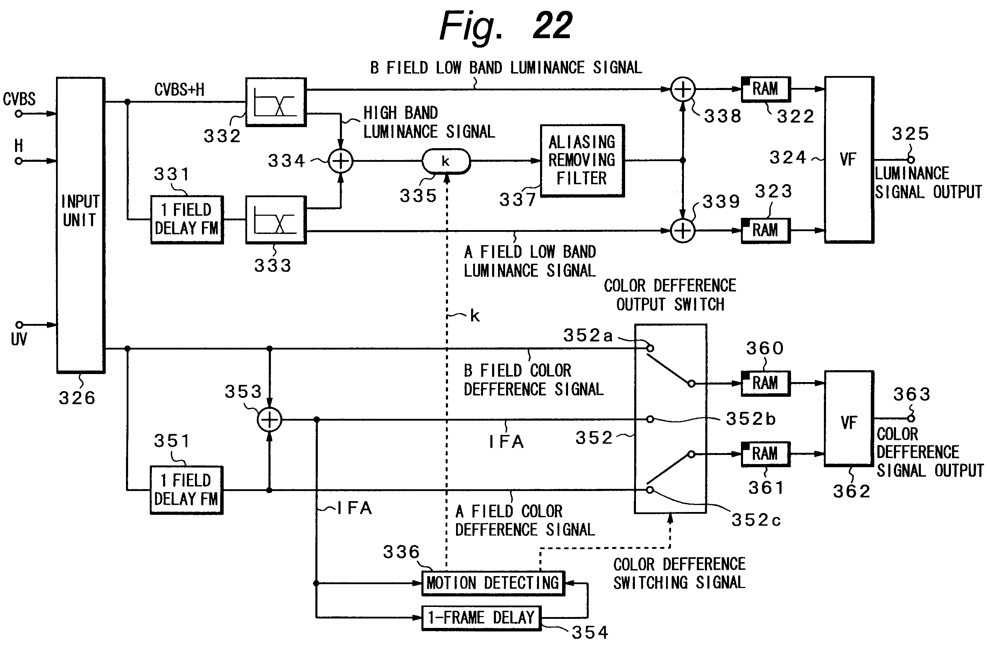

Fig. 22 shows an example of a construction in which the 1-field delay FM 321 is replaced to the color plus process and 3-dimensional Y/C separating unit 307. Actually, in many cases, such a construction is often used as an example. With respect to the luminance signal, the B field luminance signal and A field luminance signal outputted from the adders 338 and 339 are supplied to the B field RAM 322 and A field RAM 323, respectively.

On the other hand, as for the color difference signal, the color difference signal outputs on the B field side and A field side of the color difference output switch 352 are supplied to a B field RAM 360 and an A field RAM 361, respectively. The RAMs 360 and 361 are used to perform an intrafield scanning line interpolating process to the color difference signal. The B field color difference signal and A field color difference signal which were read out from the RAMs 360 and 361 are supplied to a vertical filtering processing unit 362 and are subjected to a vertical filtering process. The resultant signal is outputted as a color difference signal output to an output terminal 363.

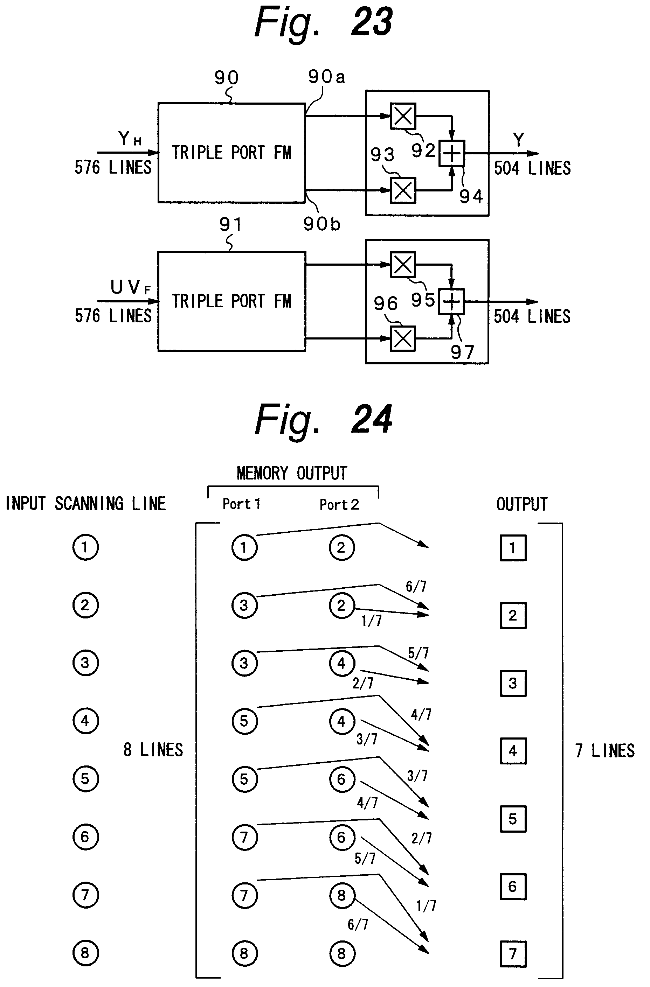

As mentioned above, in the case where the image by the PALplus system in which the number of effective scanning lines is equal to 576 is displayed onto the screen in which the number of scanning lines is different from the above number, for example, the number of scanning lines is equal to 480 by the VGA standard, a format conversion to reduce the number of scanning lines is necessary. Fig. 23 shows an example of a construction of the format converting unit 308 for performing a format conversion. In the format converting unit 308, the number of scanning lines is first changed to a desired number by using a field memory and, after that, a filtering in the vertical direction is carried out.

Although the format converting unit 308 has a converting unit for the luminance signal Y and a converting unit for the color difference signal UV, since the processes in those converting units are substantially the same, only the conversion for the luminance signal Y will now be described.

The luminance signal $Y_H$ outputted from a output terminal 325 is supplied to a triple port field memory (hereinafter, abbreviated to a triple port FM) 370. The triple port FM 370 has three ports. For example, supplied data is written to one port and different data can be read out in parallel from two ports 370a and 370b, respectively. A luminance signal $Y_1$ read out from the port 370a is supplied to a multiplier 371 and is multiplied with a predetermined coefficient and is supplied to one input terminal of an adder 373. Similarly, a luminance signal $Y_2$ read out from the port 370b is supplied to the other input terminal of the adder 373 through a multiplier 372. In the adder 373, the supplied luminance signals $Y_1$ and $Y_2$ are added, thereby obtaining a format converted luminance signal Y and outputting.

Fig. 24 schematically shows a general method of the format conversion. It is now assumed that scanning lines $L_1$, $L_2$, ..., and $L_8$ by the luminance signals $Y_H$ of eight lines have been sequentially written in the triple port FM 370. The written scanning lines are read out in parallel from the ports 370a and 370b, respectively. In this instance, as shown in the diagram, for example, odd-number designated scanning lines $L_1$, $L_3$, $L_5$, $L_7$, and $L_9$ are read out from the port 370a. Among them, the scanning lines $L_3$, $L_5$, and $L_7$ are overlappingly read out. On the other hand, the even-number designated scanning lines are overlappingly read out from the port 370b, respectively.

In the multipliers 371 and 372, coefficients are multiplied to the scanning lines which were read out, respectively. In the example, in the multiplier 371, 1, 1/7, 5/7, 3/7, 3/7, 5/7, 1/7, and 0 are sequentially multiplied to the input scanning lines of eight lines, respectively. In the multiplier 93, 0, 6/7, 2/7, 4/7, 4/7, 2/7, 6/7, and 0 are similarly multiplied, respectively. By respectively adding the scanning lines obtained as results of those multiplications, the scanning lines of seven lines can be obtained from the scanning lines of eight lines. Thus, the total number of scanning lines per frame is set to 576 x 7/8 = 504. When considering an overscan portion, it is the number of scanning lines suitable to be displayed on the display device in which the number of scanning lines is equal to 480.

In the construction to demodulate the PALplus signal according to the prior art as mentioned above, the field memory is used in the scanning line interpolating process and, further, in order to reduce the number of scanning lines from 576 to 504, the conversion of the number of scanning lines is performed by using the field memory. Since the field memory is used twice for the same purpose of the converting process of the number of scanning lines as mentioned above, there is a problem such that a redundancy is large. There is, consequently, also a problem of an increase in costs of the apparatus.

According to the prior art, in the foregoing format converting unit 308, the vertical filtering process is further performed to the PALplus signal derived by executing the vertical filtering process in the chrominance signal scanning line interpolation processing unit 306 and luminance signal scanning line interpolation processing unit 307. Therefore, there is a problem such that a vertical resolution in a middle high band deteriorates. Further, since the vertical filtering processes of two stages are executed, there is also a problem such that a hardware scale increases.

Further, since the converting process of the number of scanning lines is performed, the number of stages of the signal process increases, so that the number of factors which cause the deterioration of the picture quality increases. To avoid it, as mentioned above, there is a method whereby a small change in aspect ratio is sacrificed and the scanning lines of 430 lines in the main picture portion in the letter box are displayed without converting the number of scanning lines. According to such a method, however, since there are characteristics such that the vertical frequency characteristics in the film mode in the PALplus signal include an aliasing component in the main picture portion, there is a problem such that a line flicker is conspicuous.

OBJECTS AND SUMMARY OF THE INVENTION

It is, therefore, an object of the invention to provide video signal processing apparatus of the PALplus system in which a hardware scale is suppressed without using a redundant field memory or the like.

Another object of the invention is to provide video signal processing apparatus of the PALplus system in which no line flicker is caused in a film mode.

To solve the above subjects, according to the invention, there is provided a video signal processing apparatus for receiving a broadcasting signal in which a video signal of a main picture portion is transmitted in a letter box format and a reinforcement signal to reinforce a vertical resolution of the video signal of said main picture portion by using scanning lines constructing non-picture portions, characterized by comprising: extracting means for extracting the reinforcement signal from the received broadcasting signal; an input unit for inputting the video signal of the main picture portion and the extracted reinforcement signal; multiplexing means for multiplexing the reinforcement signals of a plurality of lines to one line by a dot-sequencing process on a pixel unit basis; interleaving means for performing an interleaving process by using the multiplexed reinforcement signal and the video signal of the main picture portion; and vertical filtering processing means for smoothing a continuity in the vertical direction of the interleaved video signal.

As mentioned above, according to the invention, the resolution reinforcement signals are dot sequenced on a pixel unit basis and, and at the time of a scanning line interpolation, since the dot-sequenced reinforcement signals and a reinforcement signal in which the dot-sequencing process was reconstructed are used, the conversion of the number of scanning lines and the scanning line interpolation can be performed in a lump.

The above, and other, objects, features and advantage of the present invention will become readily apparent from the following detailed description thereof which is to be read in connection with the accompanying drawings.

BRIEF DESCRIPTION OF THE DRAWINGS

Fig. is a block diagram showing an example of a construction of an apparatus to which the invention can be applied;
Fig. 2 is a block diagram showing an example of a construction of a video signal processing apparatus according to the invention;
Figs. 3A to 3E are schematic diagrams showing a procedure of signal processes in the film mode;
Fig. 4 is a block diagram showing an example of a construction of the video signal processing apparatus according to the invention;
Figs. 5A to 5D are schematic diagrams for explaining a line multiplexing process and an interleaving process;
Fig. 6 is a block diagram showing an example of a detailed construction of the video signal processing apparatus;
Fig. 7 is a schematic diagram showing an example of a vertical filtering process;
Figs. 8A and 8B are schematic diagrams showing an example of a method for format conversion;
Figs. 9A and 9B are schematic diagrams showing an example of a method for direct conversion according to the invention;
Fig. 10 is a block diagram showing an example of a construction of a vertical filter for performing a direct conversion;
Figs. 11A and 11B are schematic diagrams showing an example of images received by the PALplus system;

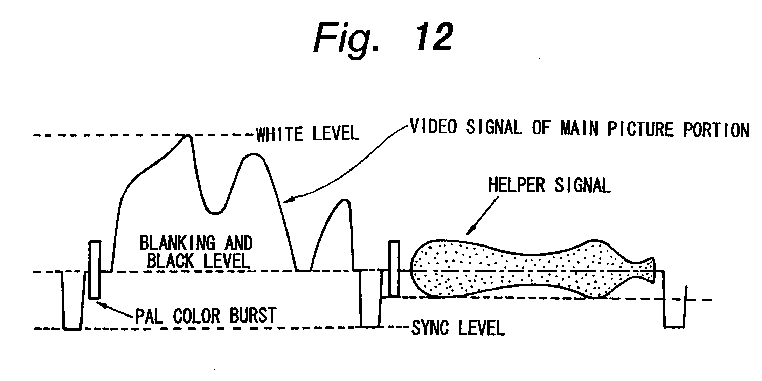

Fig. 12 is a schematic diagram showing an example of a vertical resolution reinforcement signal and a signal of a letter box;
Figs. 13A to 13C are schematic diagrams showing schematically a scanning line interpolation by the PALplus system;
Fig. 14 is a schematic diagram showing the details of a frame construction by the PALplus system;
Figs. 15A and 15B are schematic diagrams showing a PALplus signal;
Fig. 16 is a block diagram showing an example of a construction of a video apparatus for demodulating the PALplus signal and allowing an image to be displayed on a display device by the VGA standard;

Fig. 17 is a block diagram showing an example of a construction of a luminance signal scanning line interpolation processing unit;

Figs. 18A to 18C are schematic diagrams schematically showing an interpolating process in an interpolation processing unit;

Figs. 19A to 19D are schematic diagrams showing a memory control in a field memory in the film mode;

Fig. 20 is a block diagram schematically showing an example of a construction of a color plus process and 3-dimensional Y/C separating unit;

Figs. 21A to 21E are time charts for a color plus signal process;

Fig. 22 is a block diagram showing an example of a construction in which a 1-field delay FM is replaced to the color plus process and 3-dimensional Y/C separating unit;

Fig. 23 is a block diagram showing an example of a construction of a format converting unit; and

Fig. 24 is a schematic diagram schematically showing a general method for format conversion.

## DETAILED DESCRIPTION OF THE PREFERRED EMBODIMENTS

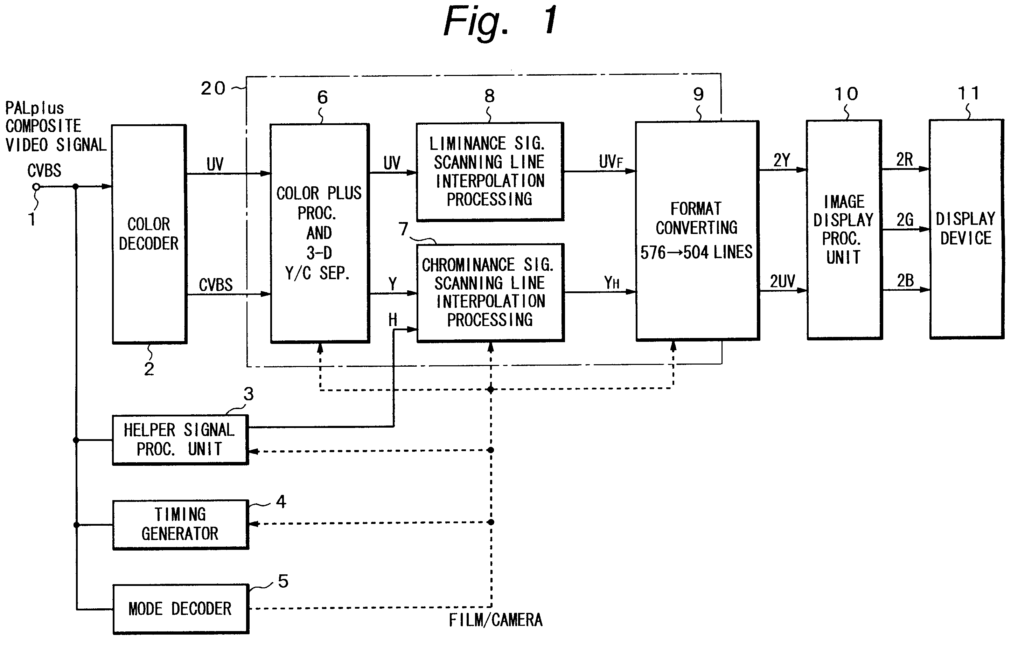

An embodiment of the invention will now be described hereinbelow with reference to the drawings. Fig. 1 shows an example of a construction of an apparatus to which the invention can be applied. A whole construction is almost the same as the construction of the video apparatus described in the above prior art. Namely, for example, the PALplus broadcasting radio wave received by an antenna is converted into the composite PALplus signal CVBS through a tuner and VIF (not shown) and is supplied from an input terminal 1. The signal CVBS is supplied to a color decoder processing unit 2, a helper signal processing unit 3, a timing generator 4, and a mode decoder 5.

A mode decoder 5 extracts the WSS multiplexed to the 23rd line of the PALplus signal. The timing generator 4 forms a timing signal on the basis of, for example, a horizontal sync signal of the PALplus signal. The WSS and the timing signal are supplied to each section necessary in the construction.

The vertical resolution reinforcement signals multiplexed to the upper and lower non-picture portions of the signal CVBS are demodulated by the helper signal processing unit 3, thereby obtaining the helper signal H. The helper signal H is supplied to a luminance signal scanning line interpolation processing unit 7, which will be explained hereinlater.

In the color decoder 2, a band in which a color carrier is included is extracted from the supplied signal CVBS by, for instance, a band pass filter. A color demodulation is performed to the extracted signal and the color difference signal UV including a cross color component is formed. The color difference signal UV actually comprises the color difference signal $C_R$ and $C_B$. The color difference signal UV and signal CVBS are respectively A/D converted into digital signals. The digital signals are supplied to a color plus process and 3-dimensional Y/C separating unit 6.

In the color plus process and 3-dimensional Y/C separating unit 6, the luminance signal Y is extracted from the supplied signal CVBS and the cross color component is removed from the supplied color difference signal UV. The luminance signal Y is supplied to the luminance signal scanning line interpolation processing unit 7. The color difference signal UV is supplied to a chrominance signal scanning line interpolation processing unit 8. In the scanning line interpolation processing units 7 and 8, in the camera mode, a scanning line interpolating process is performed to the supplied signals by a method, which will be explained hereinlater, so that the number of scanning lines is changed from 430 to 504. In the film mode, the scanning line interpolating process is not performed but a line flicker removing process is executed by a method, which will be explained hereinlater. The luminance signal Y and color difference signal UV which were subjected to the scanning line interpolating process or flicker removing process are set to the luminance signal $Y_H$ and color difference signal $UV_H$, respectively, and are outputted.

Although the number of scanning lines is set to 430 in the PALplus standard, in the actual circuit, the number of scanning lines is set to 432 and the processes are executed as mentioned above on the basis of reasons such that an integer ratio can be easily obtained and the like. Although such a construction is realized by using two dummy lines, even if two dummy lines are added as mentioned above, they are ordinarily out of the display range of the television receiver and no problem occurs.

The color difference signal $UV_H$ and luminance signal $Y_H$ are supplied to a format converting unit 9. In the film mode, in the format converting unit 9, a format conversion to change the number of scanning lines is performed to the supplied color difference signal $UV_H$ and luminance signal $Y_H$. In the format conversion, for example, as described in the above prior art, the triple port RAM is used, coefficients are multiplied to the even-number designated and odd-number designated lines which were read out in parallel, respectively, and the resultant lines are added, thereby obtaining a desired number of scanning lines. In this example, the number of scanning lines is converted from 430 to 504 so as to be adapted to the display device according to the VGA standard.

On the other hand, in the camera mode, as described hereinafter, since the format conversion has already been performed at the front stage, the supplied luminance signal $Y_H$ and color difference signal $UV_H$ pass through the format converting unit 9.

The color difference signal $UV_H$ and luminance signal $Y_H$ in which the number of scanning lines was changed are supplied to an image display processing unit 10, respectively. In this instance, the color difference signal $UV_H$ and luminance signal $Y_H$ are supplied to the image display processing unit 10 at a double reading speed. Such a process is based on a driving method of a display device 11, which will be explained hereinlater.

In the image display processing unit 10, the color difference signal $UV_H$ and luminance signal $Y_H$ are converted into a signal format suitable for display on the display device 11. In this case, they are converted into the signal comprising three primary colors of RGB. The RGB signals are respectively supplied to the display device 11 comprising, for example, an LCD and its driving unit and displayed.

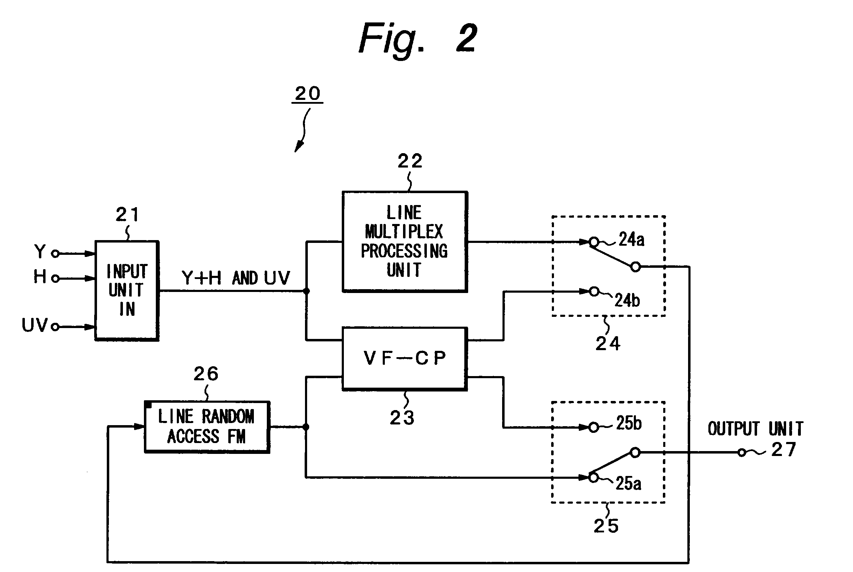

Fig. 2 schematically shows a construction of a video signal processing apparatus 20 according to an embodiment of the invention. The video signal processing apparatus 20 is formed by integratedly constructing the color plus process and 3-dimensional Y/C separating unit 6, color difference signal scanning line interpolation processing unit 8, and luminance signal scanning line interpolation processing unit 7 mentioned above and, further, executes a format conversion.

The video signal processing apparatus 20 comprises: an input unit 21 to which each signal is supplied; a line multiplex processing unit 22; a vertical filter and color plus processing unit (hereinafter, abbreviated to a "VF-CP unit") 23; switching circuits 24 and 25; and a line random access field memory (hereinafter, abbreviated to a line random access FM) 26. The VF-CP unit 23 has two input terminals and two output terminals and can execute processes in parallel for the signals of different fields. The FM 26 comprises an RAM. Field data is stored in the FM 26 and the FM 26 can be accessed at random every line.

According to the embodiment, in the camera mode, in the line multiplex processing unit 22, by multiplexing the helper signals H of two lines every pixel, they are multiplexed as a helper signal $H^2$ of one line. The multiplexed helper signal $H^2$ and the signal of the main picture portion are interleaved at a ratio of 6 : 1, thereby obtaining the scanning lines of 432 lines x (7/6) = 504 lines per frame. By performing a vertical filtering process to the scanning lines of 504 lines obtained, the scanning line interpolating process using the helper signal H is executed.

In Fig. 2, the luminance signal Y, color difference signal UV, and helper signal H are supplied from the color decoder 2 to the input unit 21. Since the video signal processing apparatus 20 has a construction including a Y/C separating function, as will be explained hereinlater, actually, the PALplus composite signal CVBS is supplied to the input unit 21 instead of the luminance signal Y. In the input unit 21, the helper signal H is multiplexed to the nonpicture portion of the supplied luminance signal Y, thereby obtaining a new luminance signal Y + H. The luminance signal Y + H and color difference signal UV are respectively A/D converted and outputted.

Since the subsequent processes are different in the camera mode and film mode, explanation will now be made every mode. The modes are discriminated on the basis of the WSS supplied from the mode decoder 5 to the video signal processing apparatus 20.

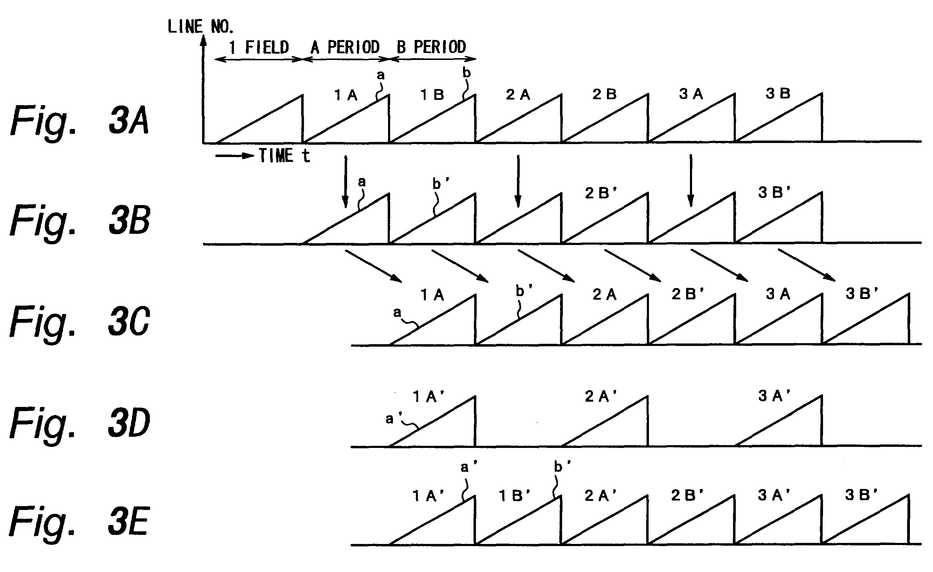

The case of the film mode will be first described. Figs. 3A to 3E showsa procedure of the signal processes in the video signal processing apparatus 20 in the film mode. In the diagram, an axis of abscissa shows an elapse of time and an axis of ordinate indicates line numbers of the scanning lines. Reference numerals 1A, 1B, 2A, 2B, 3A, and 3B denote signals of A and B fields of the first, second, and third frames, respectively. The signal added with a prime (') shows that a predetermined process was carried out, which is explained hereinafter. A V blanking period is ignored in this diagram since it is not directly concerned with the essence of the invention.

In the film mode, the switching circuits 24 and 25 are switched every field in one frame. That is, in the switching circuits 24 and 25, terminals 24a and 25a are selected for the period of time of the A field as a first field in one frame, respectively. On the other hand, terminals 24b and 25b are selected for the period of time of the B field as a second field, respectively. The switching operations of the switching circuits 24 and 25 of every field are performed on the basis of a timing signal supplied from the timing generator 4.

As shown in Fig. 3A, the luminance signal Y + H and color difference signal UV of the A and B fields are supplied to the input unit 21 in accordance with the order of the A field and B field of the first frame, the A field and B field of the second frame, .... The luminance signal Y + H and color difference signal UV of the field unit are collectively called a field signal here. The field signal is supplied from the input unit 21 to the line multiplex processing unit 22.

In the film mode, different from the foregoing camera mode, since the scanning line interpolating process is not performed, the multiplex of the helper signal H as executed in the foregoing camera mode is not performed in the line multiplex processing unit 22. Therefore, the luminance signal Y + H and color difference signal UV supplied to the line multiplex processing unit 22 pass through the line multiplex processing unit 22 and are generated as they are.

For the period of time of the A field, for instance, a field signal (a) outputted from the input unit 21 is supplied to the line random access FM 26 through the switching circuit 24 in which the terminal 24a was selected (Fig. 3B). The luminance signal Y + H and color difference signal UV of the A field are read out from the line random access FM 26 with a delay of one field as shown in Fig. 3C and are outputted.

For the period of time of the next B field, since the terminal 24b has been selected in the switching circuit 24, for example, the field signal (b) outputted from the input unit 21 is supplied to the other input terminal of the VF-CP unit 23. At this time, as mentioned above, the field signal (a) is delayed by a time of one field and is supplied to one input terminal of the VF-CP unit 23. Therefore, for the period of time of the B field, the field signals (a) and (b) of both of the A and B fields are supplied simultaneously to the VF-CP unit 23. As mentioned above, since the color plus process is executed between both of the A and B fields of the same frame, the color plus process is carried out for the period of time of the B field by the VF-CP unit 23.

Further, in the VF-CP unit 23, a vertical filtering process is performed on a frame unit basis to the luminance signal Y + F and color difference signal UV in which the color plus process was executed. When the vertical filtering process is executed to only one field, the picture quality is deteriorated due to the occurrence of the line flicker as shown in the foregoing problem. In the example, therefore, the vertical filtering process is performed simultaneously on a frame unit basis, namely, to both of the A and B fields. Thus, the line flicker that is peculiar to the film mode in the PALplus signal can be reduced.

The results obtained by performing the above process to the signals of the A field and B field are outputted as a field signal a' and a field signal b' from the VF-CP unit 23, respectively. The field signal a' is outputted as it is to an output terminal 27 through the switching circuit 25 in which the terminal 25b has been selected (Fig. 3D).

On the other hand, the field signal b' is supplied to the line random access FM 26 as shown in Fig. 3B through the switching circuit 24 in which the terminal 24b has been selected. As shown in Fig. 3C, the field signal b' is delayed by a time of one field and is outputted. In this instance, since the field has already progressed by one and the period of time of the A field comes, the terminal 25a has been selected in the switching circuit 25. Therefore, the processing result of the B field outputted from the line random access FM 26 is outputted to the output terminal 27 through the switching circuit 25. As mentioned above, the field signals a' and b' which were delayed by a time of one field for the signals supplied to the input unit 21 are supplied as output signals to the output terminal 27 (Fig. 3E).

The case of the camera mode will now be described. In the camera mode, the terminal 24a in the switching circuit 24 and the terminal 25b in the switching circuit 25 are fixedly selected, respectively. The luminance signal Y + H and color difference signal UV outputted from the input unit 21 are supplied to the line multiplex processing unit 22.

In the line multiplex processing unit 22, in the supplied luminance signal Y + H, the helper signals H of two lines are multiplexed to one line, thereby obtaining the helper signal $H^2$. A luminance signal Y + $H^2$ including the helper signal $H^2$ is supplied to the line random access FM 26 through the switching circuit 24 in which the terminal 24a has been selected. The luminance signal Y + $H^2$ stored in the line random access FM 26 is read out in a rule such that the scanning lines of the main picture portion and the scanning lines including the helper signal $H^2$ are rearranged at a ratio of 6 : 1, namely, six lines are arranged as scanning lines of the main picture portion and one line is arranged as a scanning line including the helper signal $H^2$, so that an interleaving process is performed. The scanning lines of 504 lines are obtained by the interleaving process. The multiplexing of the helper signal H and the interleaving process will be described in detail hereinlater.

The color difference signal UV is outputted as it is without being subjected to any special process in the line multiplex processing unit 22 and is supplied to the line random access FM 26. When the color difference signal UV is read out from the line random access FM 26, since a dummy signal is inserted to the position corresponding to the line where the helper signal $H^2$ is inserted to the luminance signal Y, the interleaving process is performed. Since the dummy signal is regarded at a zero level in the subsequent vertical filtering process, any signal can be used.

The color difference signal UV and the luminance signal Y + $H^2$ which was interleave processed are supplied to one input terminal of the VF-CP unit 23. The luminance signal Y + $H^2$ is subjected to the vertical filtering process by the VF-CP unit 23, so that a scanning line interpolating process is executed by the helper signal $H^2$ and becomes the luminance signal $Y_H$ and is outputted from a terminal 25b through the switching circuit 25. The details of the vertical filtering process of the luminance signal Y + $H^2$ will be explained hereinlater. The color difference signal UV is subjected to the vertical filtering process in the VF-CP unit 23, so that the intrafield scanning line interpolation is executed and the resultant signal is outputted as a color difference signal $UV_F$

In the embodiment, a motion adaptive color plus process in the camera mode is not performed. Thus, the scanning line interpolating process by the helper signal in the camera mode as a requirement of the PALplus signal process can be realized by only one field memory without using the field memory for the motion adaptive color plus process.

The luminance signal $Y_H$ and color difference signal $UV_F$ in which the reinforcement of the resolution and the scanning line interpolation were performed are outputted from the VF-CP unit 23 and are supplied to the output terminal 27 through the switching circuit 25 in which the terminal 25b has been selected.

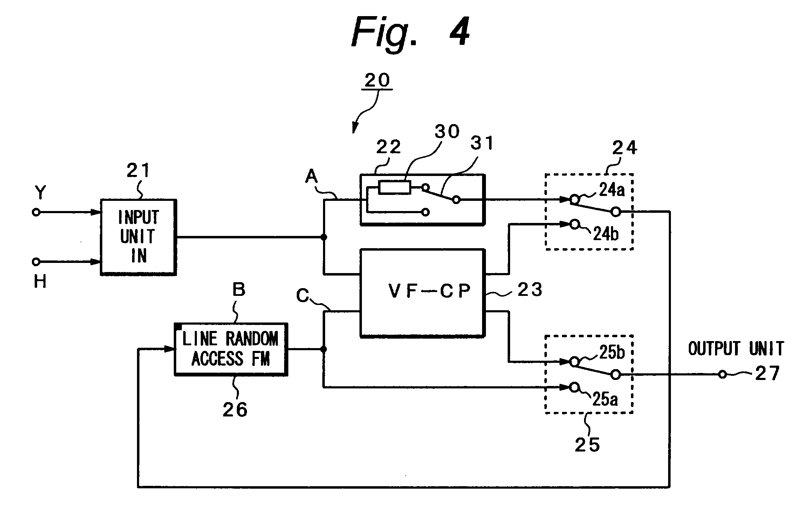

A multiplexing process of the helper signal H in the line multiplex processing unit 22 in the camera mode mentioned above will now be described. Fig. 4 shows an example of a construction of the video signal processing apparatus 20 to perform a multiplexing process. In Fig. 4, substantially the same portions as those in Fig. 2 mentioned above are designated by the same reference numerals and their descriptions are omitted. In Fig. 4, only the luminance signal Y and helper signal H which are necessary for the multiplexing process are shown.

When the scanning line interpolating process by the helper signal H is performed by the conventional method of inserting the helper signal H to the scanning lines of three lines of the main picture portion, the number of scanning lines after completion of the process becomes 576 lines/frame (287 lines/field). Therefore, when they are displayed on the display device 11 of, for example, VGA standard in which the number of scanning lines is equal to 480 lines per frame, a converting process to reduce the number of scanning lines to, for example, 504 lines/frame is further necessary. In this case, the vertical filtering process is executed in both of the scanning line interpolating process and the converting process, so that a problem such as deterioration of the picture quality, an increase in hardware scale, or the like occurs.

In the invention, in order to finish the vertical filtering process by one time, at the time of the interleaving process, the helper signal H of one line is inserted for six scanning lines of the main picture portion as mentioned above, thereby setting the number of scanning lines after completion of the process to 252 lines. In this instance, since the number of lines of the helper signal H to be inserted lacks, by dot sequencing the helper signals H of two lines, it is multiplexed to the helper signal $H^2$ of one line, thereby allowing the helper signal $H^2$ of one line to have the information of two lines of the helper signal H. The multiplexed helper signal $H^2$ is shaped at the time of the vertical filtering process at the post stage and is subjected to the scanning line interpolating process.

In the input unit 21, the helper signal H is multiplexed to the upper and lower non-picture portions of the luminance signal Y, thereby obtaining the luminance signal Y + H. The luminance signal Y + H is supplied to the line multiplex processing unit 22. The line multiplex processing unit 22 has a 1-line delay 30 to delay the supplied luminance signal Y + H by a time of only one line and a switching circuit 31 which is switched every pixel. An output of the 1-line delay 30 is supplied to one terminal of the switching circuit 31.

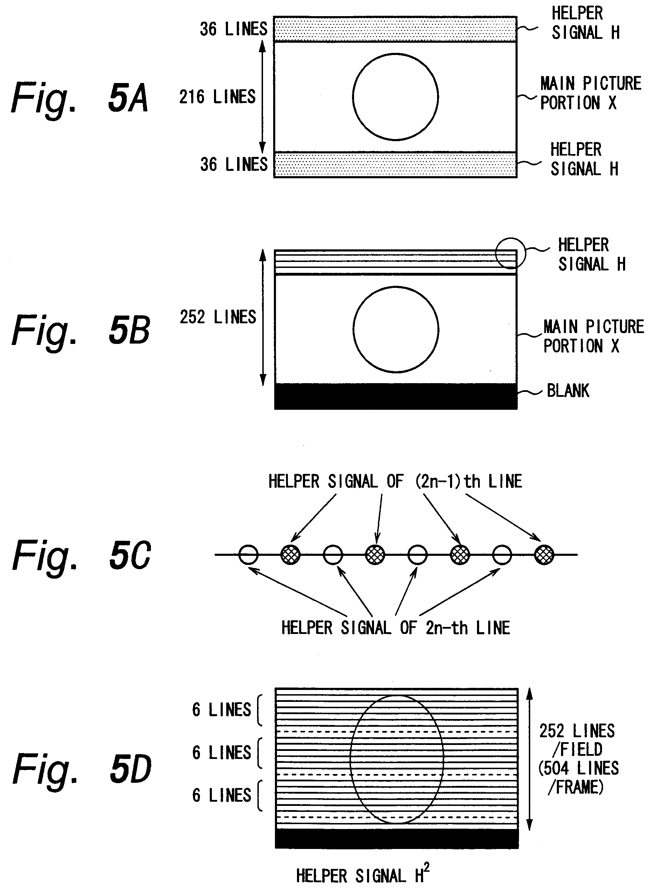

As a structure of the luminance signal Y + H at point A in Fig. 4, as shown in Fig. 5A, the helper signals H each consisting of 36 lines are arranged at the upper and lower positions of the scanning lines of the main picture portion X of 216 lines. The luminance signal Y + H is supplied to the line multiplex processing unit 22. In the line multiplex processing unit 22, the helper signals H of the 2n-th line and (2n-1)th line are alternately outputted every pixel by the 1-line delay 30 and switching circuit 31 which is switched every pixel. Thus, as shown in Fig. 5C, since the helper signal H of the 2n-th line and the helper signal H of the (2n-1)th line are dot sequenced, the helper signals H of two lines are multiplexed to one line, thereby obtaining the multiplexed helper signal $H^2$.

The luminance signal Y + $H^2$ in which the multiplexed helper signal $H^2$ was multiplexed is supplied to the line random access FM 26 through the switching circuit 24 in which the terminal 24a has been fixedly selected in the camera mode. The luminance signal Y + $H^2$ at point B in Fig. 4 at this time is shown in Fig. 5C. Since the helper signals H of two lines have been multiplexed to one line, the number of scanning lines of the luminance signal Y + $H^2$ is reduced by 36 lines as compared with the inherent number of lines. Therefore, in the luminance signal Y + $H^2$ which is supplied to the line random access FM 26, the portion to which the lower helper signal H was multiplexed is set to a blank as shown in Fig. 5B.

The luminance signal Y + $H^2$ is read out from the line random access FM 26 at a ratio of one line of the multiplexed helper signal $H^2$ for six scanning lines of the main picture portion. Fig. 5D shows the readout luminance signal Y + $H^2$ on the output side (point C in Fig. 4) of the line random access FM 26. Since one line of the multiplexed helper signal $H^2$ is read out for six lines of the main picture portion as mentioned above, the scanning lines of 252 lines (namely, 504 lines/frame) per field can be obtained and the interleaving process is performed. In the color difference signal UV, for example, the dummy signal at the signal level 0 is inserted to the position where the multiplexed helper signal $H^2$ is inserted.

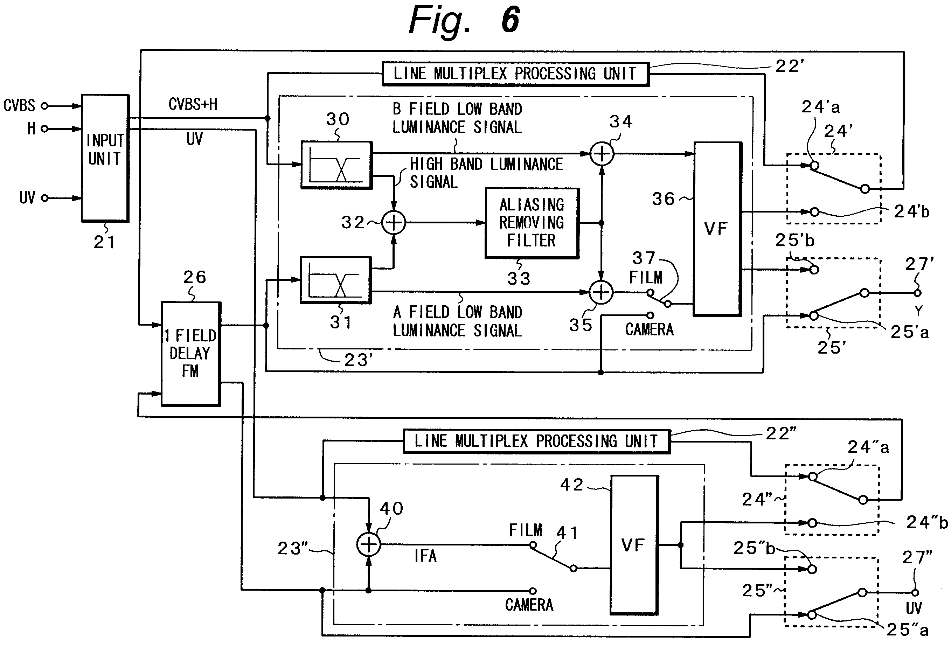

Fig. 6 shows further in detail an example of the construction of the video signal processing apparatus 20. In Fig. 6, portions corresponding to those in Fig. 2 mentioned above are designated by the same reference numerals and their detailed descriptions are omitted. The VF-CP unit 23 is constructed by a luminance signal processing unit 23' for performing processes of the luminance signal and a color difference signal processing unit 23" for performing processes of the color difference signal.

First, processes in the film mode will be described. In the film mode, the signal CVBS, helper signal H, and color difference signal UV are supplied to the input unit 21. In the input unit 21, the helper signal H is multiplexed to the upper and lower non-picture portions of the signal CVBS, thereby obtaining a signal CVBS + H. The signal CVBS outputted from the input unit 21 is supplied to a band dividing filter 30 and is also supplied to a line multiplex processing unit 22'. The color difference signal UV outputted from the input unit 21 is supplied to one input terminal of an adder 40 and a line multiplex processing unit 22".

For the period of time of the A field during which the signal of the A field is supplied to the signal processing apparatus 20, the terminals 24'a and 25'a are respectively selected in the switching circuits 24' and 25'. Therefore, in the A field, the signal CVBS + H supplied to the terminal 24'a is supplied to the 1-field delay FM 26 through a line multiplex processing unit 22' and the switching circuit 24'. The signal CVBS is delayed by a time of one field and is read out from the 1-field delay FM 26, namely, for a period of time of the B field during which the signal of the B field is supplied to the signal processing apparatus 20. The read-out signal CVBS + H of the A field is supplied to the band dividing filter 31.

For the period of time of the B field, terminals 24'b and 25'b are respectively selected in the switching circuits 24' and 25'. The signal CVBS + H of the B field is supplied to the band dividing filter 30 through the input unit 21.

Each of the band dividing filters 30 and 31 has, for example, a high-pass filter and a low-pass filter and divides the supplied signal CVBS + H into a low frequency region including no color carrier signal and a high frequency region including the color carrier signal. A boundary of the division in this instance is set to about 3 MHz.

In the signal CVBS + H of the B field which was band divided by the band dividing filter 30, the B field high band luminance signal on the high frequency side including the color carrier signal is supplied to one input terminal of an adder 32. On the other hand, the B field low band luminance signal on the low frequency side is supplied to one input terminal of an adder 34. Similarly, in the signal CVBS + H of the A field which was band divided by the band dividing filter 31 and was delayed by a time of one field, the A field high band luminance signal on the high frequency side including the color carrier signal is supplied to the other input terminal of the adder 32. On the other hand, the A field low band luminance signal on the low frequency side is supplied to one input terminal of an adder 35.

As mentioned above, for the period of time of the B field, the signals CVBS + H of the B field and A field are respectively supplied to the band dividing filters 30 and 31 and are set to the signals suitable for performing the processes in the film mode and the color plus process.

That is, for the period of time of the B field, the high band luminance signal of the A field and the high band luminance signal of the B field are added in the adder 32. As mentioned above, in the PALplus signal, since the phases of the color carrier signals of the A field and B field are different by 180°, the color carrier signals are set off by the addition and are removed. As mentioned above, the color plus process is executed and the Y/C separation is performed. The intraframe average high band luminance signal $Y_{IFA}$ from which the color carrier signal was removed is supplied to an aliasing removing filter 33 and an aliasing component is removed. The intraframe average high band luminance signal $Y_{IFA}$ in which the aliasing component was removed is supplied to both of the other input terminal of the adder 34 and the other input terminal of the adder 35.

In the adder 34, the intraframe average high band luminance signal $Y_{IFA}$ outputted from the aliasing removing filter 33 and the B field low band luminance signal outputted from the band dividing filter 30 are added and an addition output is directly supplied to a vertical filter 36. In the adder 35 as well, the intraframe average high band luminance signal $Y_{IFA}$ outputted from the aliasing removing filter 33 and the A field low band luminance signal outputted from the band dividing filter 31 are similarly added. An addition output is supplied to the vertical filter 36 through a switching circuit 37 in which the film side has fixedly been selected in the film mode. In the vertical filter 36, a vertical filtering process is performed to those supplied signals, thereby obtaining a luminance signal of the A field and a luminance signal of the B field.

The luminance signal of the A field is supplied to an output terminal 27' through the switching circuit 25' in which the terminal 25'b has been selected for the period of time of the B field. On the other hand, the luminance signal of the B field is supplied to the 1-field delay FM 26 shown as a line random access FM 26 in Fig. 4 through the switching circuit 24' in which the terminal 24'b has been selected. For the period of time of the next A field after the elapse of time of one field, the luminance signal of the B field is read out from the 1-field delay FM 26. For the period of time of the A field, since the terminal 25'a has been selected in the switching circuit 25', the luminance signal of the B field is outputted to the output terminal 27' through the switching circuit 25'.

As mentioned above, in the film mode, the luminance signal of the A field and the luminance signal of the B field are alternately derived to the output terminal 27', so that the luminance signal $Y_H$ which was color plus processed is outputted.

As mentioned above, the color difference signal UV of the A field outputted from the input unit 21 is supplied to one input terminal of the adder 40 and is also supplied to a terminal 24"a of a switching circuit 24" through a line multiplex processing unit 22". In a manner similar to the foregoing switching circuits 24' and 25', in the switching circuit 24" and a switching circuit 25", the terminal 24"a and a terminal 25"a are selected for the period of time of the A field and terminals 24"b and 25"b are selected for the period of time of the B field, respectively. For the period of time of the A field, the color difference signal UV of the A field supplied to the terminal 24"a is supplied to the 1-field delay FM 26 through the switching circuit 24".

For the period of time of the next B field, the color difference signal UV of the A field is read out from the 1-field delay FM 26. The read-out color difference signal UV of the A field is supplied to the other input terminal of the adder 40. At the same time, the color difference signal UV of the B field is supplied from the input unit 21 to one input terminal of the adder 40. The color difference signals UV of the A and B fields are added in the adder 40, so that an intraframe average color difference signal $UV_{IFA}$ is outputted. In the film mode, the intraframe average color difference signal $UV_{IFA}$ is immediately set to the 3-dimensional Y/C separation result. The intraframe average color difference signal $UV_{IFA}$ is supplied to a vertical filter 42 through a switching circuit 41 in which the film side has fixedly been selected in the film mode.

The intraframe average color difference signal $UV_{IFA}$ which was subjected to the vertical filtering process by the vertical filter 42 is supplied to both of the terminal 24"b of the switching circuit 24" and the terminal 25"b of the switching circuit 25". For the period of time of the B field, as mentioned above, the terminals 24"b and 25"b are selected in the switching circuits 24" and 25". Therefore, the color difference signal of the A field is supplied to an output terminal 27" from the switching circuit 25".

On the other hand, the color difference signal from the switching circuit 24" is supplied to the 1-field delay FM 26. For the period of time of the next A field after the elapse of time of one field, the output color difference signal is read out from the 1-field delay FM 26. For the period of time of the A field, since the terminal 25"a is selected in the switching circuit 25", the color difference signal of the B field read out from the 1-field delay FM 26 is outputted to the output terminal 27" through the switching circuit 25". However, the color difference signal of the A field is the same signal as the color difference signal of the B field.

As mentioned above, in a manner similar to the foregoing luminance signal, in the film mode, the color difference signal of the A field and the color difference signal of the B field are alternately outputted to the output terminal 27".

The processes in the camera mode will now be described. In the camera mode, in the luminance signal processing unit 23' and color difference signal processing unit 23", the camera side is fixedly selected in the switching circuits 37 and 41, respectively. The terminals 24'a and 24"a are fixedly selected in the switching circuits 24' and 24". Further, the terminals 25'b and 25"b are fixedly selected in the switching circuits 25' and 25".

For the period of time of the A field, the helper signal H is multiplexed to the signal CVBS + H outputted from the input unit 21 by the line multiplex processing unit 22'. After that, the multiplexed signal is supplied to the 1-field delay FM 26 through the switching circuit 24' in which the terminal 24'a has been selected. The signal CVBS + H of the A field is delayed by a time of one field by the 1-field delay FM 26 and is read out from the 1-field delay FM 26 for the period of time of the next B field. Upon reading out, the interleaving process by the helper signal H is performed. The signal CVBS + H of the B field which was read out is supplied to the vertical filter 36 and is subjected to the vertical filtering process, thereby obtaining the luminance signal $Y_H$ which was scanning line interpolated by the helper signal H. For the period of time of the B field, the luminance signal $Y_H$ is outputted to the output terminal 27' through the switching circuit 25'.

Similarly, after the helper signal H was multiplexed to the color difference signal UV outputted from the input unit 21 by the line multiplex processing unit 22", the multiplexed signal is supplied to the 1-field delay FM 26 through the switching circuit 24". The color difference signal UV of the A field is read out from the 1-field delay FM 26 for the period of time of the next B field. In this instance, a dummy signal is inserted to the position corresponding to the line in which the helper signal H was inserted in the signal CVBS mentioned above. The color difference signal UV is subjected to the vertical filtering process in the vertical filter 42 and is outputted to the output terminal 27" through the switching circuit 25".

In the camera mode, as mentioned above, the signals are delayed by a time of one field for the signals supplied to the input unit 21 and the signals of the A and B fields are alternately outputted to the output terminals 27' and 27".

The vertical filtering processes which are executed in the vertical filters 36 and 42 in the camera mode will now be described. In the vertical filters 36 and 42, although the processes are executed with respect to the luminance signal Y and color difference signal UV, respectively, since almost the same processes are carried out, a common explanation will be made for both of them. Prior to explaining them, for easy understanding, the processes by the conventional method will be first explained. The vertical filter in the ordinary PALplus system is what is called a poly-phase filter in which four kinds of filters are switched.

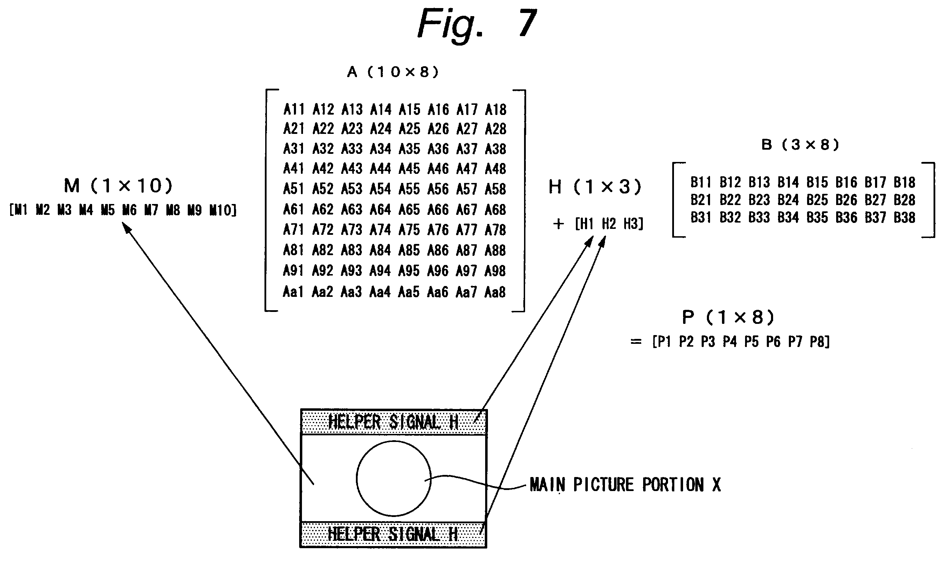

Fig. 7 shows an example of the vertical filtering processes for the scanning lines (luminance signal Y) of the main picture portion and the helper signal H by the vertical filter by a matrix expression. In this example, four kinds of filtering processes are executed for a time of two periods to the luminance signals Y of ten lines and the helper signal H of three lines. The luminance signals $Y_H$ of eight lines which were scanning line interpolated are obtained as a PALplus output.

According to the above conventional method, as mentioned above, the helper signal H of one line is inserted for the luminance signals Y of three lines and the vertical filtering process is performed.

It is now assumed that the luminance signals Y of 10 lines and the helper signals H of three lines which are supplied to the VF-CP unit 23 are set to $M_1$, $M_2$, $M_3$, ..., and $M_{10}$ and $H_1$, $H_2$, and $H_3$, respectively. Filter coefficients comprising a matrix A of 10 rows and 8 columns are multiplied to a main picture portion matrix M of 1 row and 10 columns using $M_1$ to $M_{10}$ as elements as shown in Fig. 7. Filter coefficients comprising a matrix B of 3 rows and 8 columns are multiplied to a helper signal matrix H of 1 row and 3 columns using $H_1$ to $H_3$ as elements. As shown by the following equation (1), results of the matrix multiplications are added, so that a matrix P of 1 row and 8 columns is derived as a result of the scanning line interpolating process by the PALplus system. Elements $[P_1, P_2, P_3, P_4, P_5, P_6, P_7, P_8]$ of the matrix P obtained are set to the luminance signals $Y_H$ of eight lines.

$$MA + HB = P \qquad (1)$$

The luminance signal $Y_H$ of 576 lines/frame obtained as mentioned above is format converted into the signal of 504 lines/frame. Figs. 8A and 8B show a method for such a format conversion. As shown in Fig. 8A, coefficients are multiplied to the signals of two adjacent lines of the luminance signals $Y_H$ of eight lines (excluding the first line), respectively. Sets of those signals of two lines are added, thereby obtaining the luminance signals $Y_H$ of seven lines. Thus, the total number of scanning lines per frame is set to 576 lines x 7/8 = 504 lines and are set to the number of scanning lines suitable for displaying on the display device in which the number of scanning lines is equal to 480 lines in case of considering the overscan portion.

Fig. 8B shows the above processes by a matrix expression. As mentioned above, a conversion matrix C comprising 8 rows and 7 columns is multiplied to the matrix P obtained by the above vertical filtering process, thereby obtaining a format conversion output matrix P" of 1 row and 7 column. Elements [$P"_1$, $P"_2$, $P"_3$, $P"_4$, $P"_5$, $P"_6$, $P"_7$] of the matrix P" are used as a final output which was subjected to the scanning line interpolation and the format conversion.

Actually, those processes are executed on a unit basis of the pixels in the horizontal direction constructing each scanning line.

Hitherto, the matrix arithmetic operations of two times of the scanning line interpolating process and the format conversion are executed, so that the vertical filtering process is executed at two stages. In the invention, by combining the matrix arithmetic operation shown in Fig. 7 and the matrix arithmetic operation shown in Fig. 8B mentioned above, the signal of 432 lines inputted in the letter box format of the PALplus system are converted into the PALplus demodulation signal of 504 lines which was scanning line interpolated. Thus, the number of stages of the vertical filtering processes can be reduced.

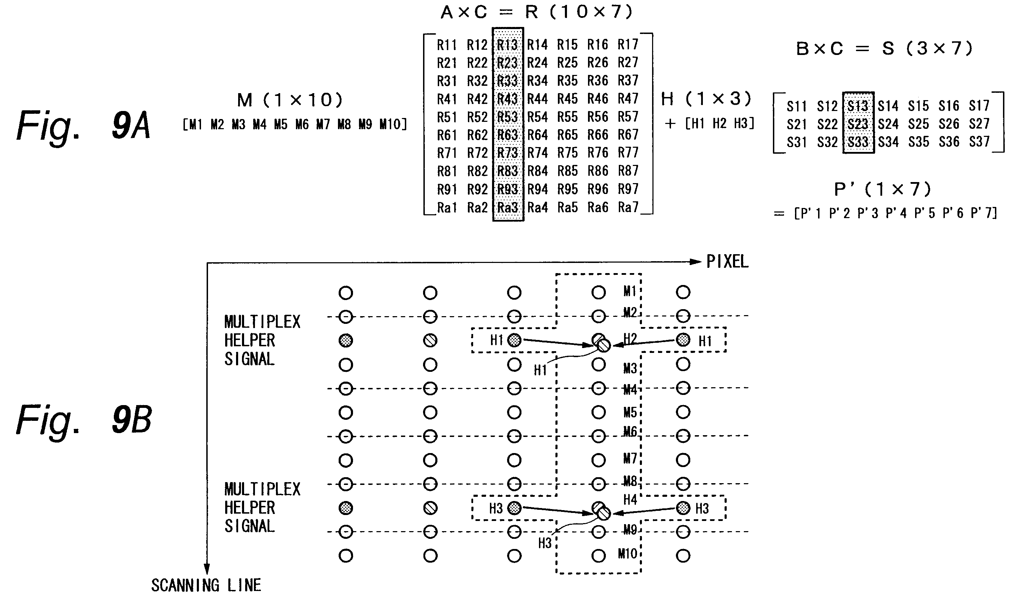

Fig. 9A and 9B show a method for the direct conversion. As shown in Fig. 9A, first, by multiplying the matrices A and C used in the foregoing conventional example, a main picture portion processing matrix R of 10 rows and 7 columns is newly produced. Similarly, by multiplying the foregoing matrices B and C, a helper signal processing matrix S of 3 rows and 7 columns is newly produced. The foregoing main picture portion matrix M and main picture portion processing matrix R are multiplied. The helper signal matrix H and helper signal processing matrix S are multiplied. As shown in the following equation (2), by adding those matrix arithmetic operation results, a matrix P' of 1 row and 7 columns is derived. Elements [$P'_1$, $P'_2$, $P'_3$, $P'_4$, $P'_5$, $P'_6$, $P'_7$] of the matrix P' are set to a final output which was subjected to the scanning line interpolating process and the format conversion.

$$MR + HS = P' \qquad (2)$$

Fig. 9B shows an example of the scanning line interpolation and the format conversion by the direct conversion. In this example, attention is paid to ten pixels of the main picture portion and two pixels of the helper signal $H^2$ which are surrounded by a broken line in the diagram, an interpolation and a converting process so as to convert six pixels into seven pixels are executed to six pixels of the main picture portion among them. That is, the interpolation and conversion are executed on the basis of the pixels at predetermined positions in the horizontal direction among the pixels corresponding to ten lines of the scanning lines of the main picture portion and the corresponding pixels of the helper signals before multiplication corresponding to those ten lines.

For example, in case of obtaining the third pixel among the pixels at seven points after completion of the interpolation and conversion, the result obtained by multiplying elements ($X_{13}$, $X_{23}$, $X_{33}$, ..., $X_{a3}$) of the third column in the main picture portion processing matrix R to the main picture portion matrix M and the result obtained by multiplying elements ($Y_{13}$, $Y_{23}$, $Y_{33}$) of the third column in the helper signal processing matrix S to the helper signal matrix H are added. In this instance, as shown in Fig. 9B, in this example, since the elements $H_1$ and $H_3$ in the helper signal matrix H don't exist at the relevant positions (only $H_2$ and $H_4$ exist), the interpolation is executed by $H_1$ or $H_3$ in the adjacent pixels.

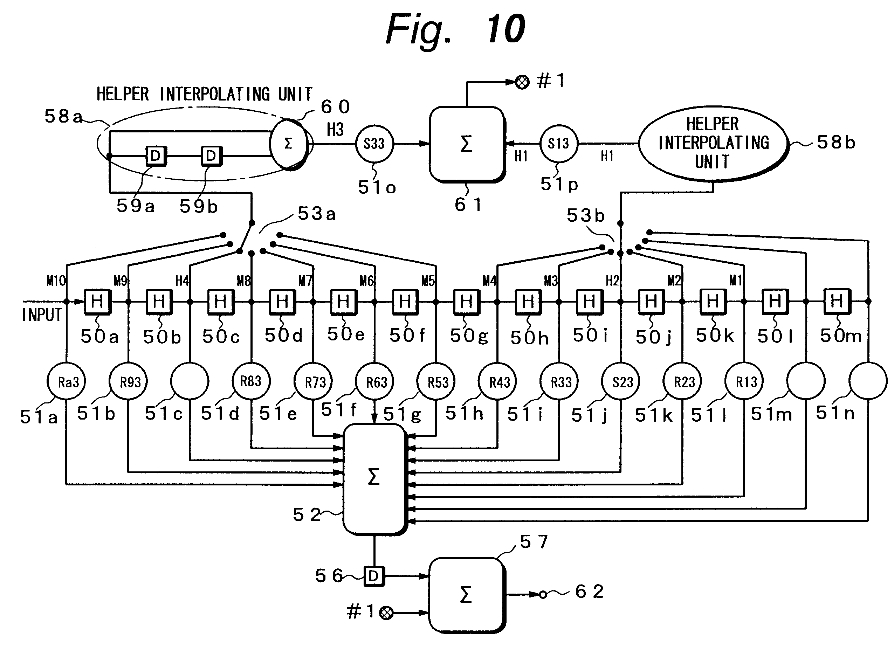

Fig. 10 shows an example of a construction of the vertical filter for performing the scanning line interpolation and format conversion by the direct conversion as mentioned above. The vertical filter comprises: line delay elements (hereinafter, abbreviated to LMs) 50a to 50m which are cascade connected; coefficient multipliers 51a to 51p connected to input terminals and output terminals of the LMs 50a to 50m; adders 52, 57, 60 and 61; selectors 53a and 53b; and 1-pixel delay elements 56, 59a and 59b.

Each of the LMs 50a to 50m delays the supplied signal by a time of one line. Therefore, each node in the LMs 50a to 50m corresponds to one line of the scanning line. Coefficients are set into the coefficient multipliers 51a to 51n and these coefficient multipliers multiply the set coefficients to the signals from an input terminal 55 and the line delay elements LMs 50a to 50m and generate the resultant signals. The set coefficients are based on the main picture portion processing matrix R and helper signal processing matrix S, respectively. The selectors 53a and 53b select lines to which the scanning lines including the helper signal H are outputted among output lines from the input terminal 55 and LMs 50a to 50m.

A case of obtaining the third pixel among the pixels at seven points after completion of the foregoing interpolation and conversion by the vertical filter with such a construction will now be described. The pixel data is sequentially supplied to the input terminal 55. The pixel data is shifted to the right one line by one by the LMs 50a to 50m for one scanning line time. Predetermined arithmetic operations are executed on the basis of the coefficients set in the coefficient multipliers 51a to 51n for the pixels at the same horizontal position in the different scanning lines of a few lines obtained as mentioned above. In the example, the arithmetic operations are executed to the pixels surrounded by a broken line frame shown in Fig. 9B.

The pixel data of the results of the arithmetic operations by the coefficient multipliers 51a to 51n are supplied to the adder 52. The adder 52 adds the supplied pixel data, thereby obtaining the desired pixel data which was scanning line interpolated. The pixel data is delayed by a time of one pixel through a 1-pixel delay element 56 and is supplied to one input terminal of an adder 57.

In this instance, as mentioned above, in the line including the helper signal H, the interpolation by the adjacent pixels is performed. In this example, the interpolation is executed in the helper signal $H_1$ and $H_3$ of the third line. To perform the interpolation, the line including the helper signal H is selected by the selectors 53a and 53b. The selector 53a performs the selection with respect to seven lines from the head. The selector 53b performs the selection with respect to the next seven lines. The selected outputs are supplied to helper interpolating units 58a and 58b, respectively.

The helper interpolating unit 58a comprises two 1-pixel delay elements 59a and 59b and an adder 60. The pixel data of the helper signal H selected by the selector 53a and supplied to the helper interpolating unit 58a is supplied to one input terminal of the adder 60. This pixel data is also delayed by a time of two pixels by passing through the 1-pixel delay elements 59a and 59b and is supplied to the other input terminal of the adder 60. Since the pixel data of the other scanning line has been delayed by a time of one pixel by the 1-pixel delay element 56, consequently, the adjacent pixels of the pixel at the predetermined horizontal positions can be added.

For example, in Fig. 9B, the third line is selected by the selector 53a and the helper signals $H_3$ adjacent to the helper signal $H_4$ by such a line are added. The addition result is supplied to the coefficient multiplier 51o and a predetermined arithmetic operation is executed on the basis of the set coefficient($S_{33}$). The operation result is supplied to one input terminal of an adder 61.

Similar processes are also executed in the helper interpolating unit 58b having the same construction as that of the helper interpolating unit 58a. That is, in this example, the tenth line is selected by the selector 53b and the helper signals $H_1$ adjacent to the helper signal $H_2$ by such a line are added. A predetermined arithmetic operation is executed to the addition result by the coefficient multiplier 51p on the basis of the set coefficient($S_{13}$) and the operation result is supplied to the other input terminal of the adder 61.

The helper signals $H_1$ and $H_3$ are added by the adder 61 and the addition result is supplied to the other input terminal of the adder 57. In the adder 57, the addition result of the helper signals $H_1$ and $H_3$ is added to the pixel $H_2$ of the pixels of the main picture portion and the helper signal H which were added by the adder 52 and were further delayed by a time of one pixel. The addition result is the desired pixel data and is outputted to an output terminal 62.

The setting of the coefficients in the coefficient multipliers 51a to 51n, 51o, and 51p will now be described. In the coefficient multipliers 51a to 51p, the coefficients are set on the basis of the foregoing matrices R and S. In the example of obtaining the third pixel, the third columns of the matrices R and S are set into the coefficient multipliers 51a to 51p, respectively.

For example, a coefficient $R_{a3}$ in the matrix R is set into the coefficient multiplier 51a to which data $M_{10}$ is finally supplied. A coefficient $R_{93}$ is set into the next coefficient multiplier 51b to which data $M_9$ is supplied. As mentioned above, $R_{a3}$ to $R_{13}$ of the third column of the matrix R are set into the coefficient multipliers 51a, 51b, 51d to 51i, 51k, and 51$\ell$ to which the pixels of the main picture portion are supplied, respectively.

In the coefficient multipliers 51c, 51j, 51o, and 51p to which the pixels of the helper signal H are supplied, a coefficient $S_{13}$ is set into the multiplier 51p to which the pixel $H_1$ is supplied, a coefficient $S_{23}$ is set into the multiplier 51j to which the pixel $H_2$ is supplied, and a coefficient $S_{33}$ is set into the multiplier 51o to which the pixel $H_3$ is supplied, respectively. On the other hand, for example, "0" such that the outputted multiplication result is invalidated in the adder 52 is set as a coefficient into the coefficient multiplier 51c to which the unnecessary pixel $H_4$ is supplied.

Such processes are sequentially executed every pixel in the horizontal direction of the line. Further, ten lines as processing targets are sequentially shifted one line by one and the processes are executed. Thus, the scanning line interpolating process is performed to the whole picture plane.

Since the processes are executed while sequentially shifting ten lines, the 1-line delay elements LMs and coefficient multipliers of a relatively large number are arranged. In this example, the LMs 50$\ell$ and 50m and coefficient multipliers 51m and 51n correspond to them. For example, "0" is set as a coefficient into the coefficient multipliers 51m and 51n and the multiplication results are invalidated in the adder 52.

As mentioned above, in the color difference signal, a dummy signal is inserted at the position where the multiplexed helper signal H is inserted. Therefore, in the process of the vertical filter 42, the dummy signal is not outputted and coefficients of the coefficient multipliers 51a to 51p are properly set so that the scanning line interpolation is performed by the intrafield interpolation.

Although explanation has been made above on the assumption that the video signal processing apparatus according to the invention is applied to the PALplus signal, the invention is not limited to such an example. For instance, now assuming that the color decoder 2 and color plus process and 3-dimensional Y/C separating unit 6 corresponds to the SECAM system, a similar function can be also realized in the SECAM system. By a similar method, the invention can be also made correspond to the EDTV-II system.

In the above embodiment, although the helper signal of one line has been inserted for the scanning lines of the main picture portion of six lines at the time of the interleaving process, the invention is not limited to such an example. That is, in the vertical filters 36 and 42, by properly changing the 1-line delay elements, coefficient multipliers, and coefficients which are set for the coefficient multipliers, the invention can be also made correspond to a case where a ratio between the main picture portion and the helper signal is set to another value.

According to the invention as described above, in the camera mode, the scanning line interpolating process of the PALplus signal and the format conversion to change the number of scanning lines are executed by the process of one time. Therefore, it is sufficient to perform the vertical filtering process in association with those processes one time and there is an effect such that the hardware scale can be reduced.

According to the invention, since the control of the signal path by two switching circuits and the rational memory management are performed, there is an effect such that the number of field memories necessary for the PALplus signal process can be reduced.

According to the invention, since the motion adaptive color plus process is not executed in the camera mode and the simple signal processes are executed, there is an effect such that the field memory necessary for motion detection can be reduced.

Further, according to the invention, in the film mode, the vertical filtering process is executed to both of the A and B fields on a frame unit basis. Therefore, there is an effect such that the occurrence of the line flicker is reduced.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

**Claims**

1. A video signal processing apparatus for receiving a broadcasting signal in which a video signal of a main picture portion is transmitted in a letter box format and a reinforcement signal to reinforce a vertical resolution of the video signal of said main picture portion by using scanning lines constructing non-picture portions, characterized by comprising:

    extracting means for extracting said reinforcement signal from the received broadcasting signal;
    an input unit for inputting the video signal of said main picture portion and said extracted reinforcement signal;
    multiplexing means for multiplexing said reinforcement signals of a plurality of lines to one line by a dot-sequencing process on a pixel unit basis;

    interleaving means for performing an interleaving process by using said multiplexed reinforcement signal and the video signal of said main picture portion; and
    vertical filtering processing means for smoothing a continuity in the vertical direction of said interleaved video signal.

2. A video signal processing apparatus according to claim 1, characterized in that

    said interleaving means is constructed by a memory which can be accessed at random.

3. A video signal processing apparatus according to claim 2, characterized by further having

    identifying means for identifying a camera mode and a film mode in accordance with an identification signal which is multiplexed to said broadcasting signal and transmitted.

4. A video signal processing apparatus according to claim 3, characterized in that

    when the camera mode is identified by said identifying means, said vertical filtering processing means smoothes the continuity in the vertical direction which is lost as a result of that said reinforcement signal is interleaved and also performs a conversion of the number of scanning lines.

5. A video signal processing apparatus according to claim 4, characterized in that

    when the film mode is identified by said identifying means, said multiplexing means doesn't perform the multiplexing process of said reinforcement signal but executes said multiplexing process only when the camera mode is identified by said identifying means.

6. A video signal processing apparatus according to claim 5, characterized in that

    said memory constructing said interleaving means doesn't perform said interleaving process in said film mode but operates as delay means.

7. A video signal processing apparatus according to claim 6, characterized in that

    said apparatus further has color plus processing means for performing a color plus process by using the video signal delayed by said memory and the video signal outputted from said input unit in said film mode, and

an output of said color plus processing means is supplied to said vertical filtering processing means.

8. A video signal processing apparatus according to claim 7, characterized by further having:

first switching means for inputting the video signals which are outputted from said multiplexing means and said vertical filtering processing means, selecting one of said video signals, and supplying to said memory; and second switching means for inputting the video signals which are outputted from said vertical filtering processing means and said memory, selecting one of said video signals, and outputting.

# Fig. 1

11 DISPLAY DEVICE

10 IMAGE DISPLAY PROC. UNIT

9 FORMAT CONVERTING 576→504 LINES

8 LUMINANCE SIG. SCANNING LINE INTERPOLATION PROCESSING

7 CHROMINANCE SIG. SCANNING LINE INTERPOLATION PROCESSING

6 COLOR PLUS PROC. AND 3-D Y/C SEP.

3 HELPER SIGNAL PROC. UNIT

4 TIMING GENERATOR

5 MODE DECODER

2 COLOR DECODER

20

PALplus COMPOSITE VIDEO SIGNAL

CVBS

1

UV

CVBS

UV

Y

H

UV$_F$

Y$_H$

2Y

2UV

2R

2G

2B

FILM/CAMERA

# Fig. 2

Fig. 3A

Fig. 3B

Fig. 3C

Fig. 3D

Fig. 3E

LINE NO.

1 FIELD    A PERIOD    B PERIOD

a          b
1 A        1 B    2 A    2 B    3 A    3 B

TIME t

a          b'
2 B'    3 B'

1 A    b'    2 A    2 B'    3 A    3 B'
a

1 A'    2 A'    3 A'
a'

a'    b'
1 A'    1 B'    2 A'    2 B'    3 A'    3 B'

EP 0 804 029 A2

Fig. 4

_Fig. 5A_

36 LINES — HELPER SIGNAL H

216 LINES — MAIN PICTURE PORTION X

36 LINES — HELPER SIGNAL H

_Fig. 5B_

252 LINES

HELPER SIGNAL H

MAIN PICTURE PORTION X

BLANK

_Fig. 5C_

HELPER SIGNAL OF (2n−1)th LINE

HELPER SIGNAL OF 2n-th LINE

_Fig. 5D_

6 LINES

6 LINES

6 LINES

252 LINES /FIELD (504 LINES /FRAME)

HELPER SIGNAL $H^2$

Fig. 6

## Fig. 7

A (10×8)

$$\begin{array}{cccccccc}
A11 & A12 & A13 & A14 & A15 & A16 & A17 & A18 \\
A21 & A22 & A23 & A24 & A25 & A26 & A27 & A28 \\
A31 & A32 & A33 & A34 & A35 & A36 & A37 & A38 \\
A41 & A42 & A43 & A44 & A45 & A46 & A47 & A48 \\
A51 & A52 & A53 & A54 & A55 & A56 & A57 & A58 \\
A61 & A62 & A63 & A64 & A65 & A66 & A67 & A68 \\
A71 & A72 & A73 & A74 & A75 & A76 & A77 & A78 \\
A81 & A82 & A83 & A84 & A85 & A86 & A87 & A88 \\
A91 & A92 & A93 & A94 & A95 & A96 & A97 & A98 \\
Aa1 & Aa2 & Aa3 & Aa4 & Aa5 & Aa6 & Aa7 & Aa8
\end{array}$$

B (3×8)

$$\begin{array}{cccccccc}
B11 & B12 & B13 & B14 & B15 & B16 & B17 & B18 \\
B21 & B22 & B23 & B24 & B25 & B26 & B27 & B28 \\
B31 & B32 & B33 & B34 & B35 & B36 & B37 & B38
\end{array}$$

M (1×10)

[M1 M2 M3 M4 M5 M6 M7 M8 M9 M10]

H (1×3)

+ [H1 H2 H3]

P (1×8)

= [P1 P2 P3 P4 P5 P6 P7 P8]

HELPER SIGNAL H

HELPER SIGNAL H

MAIN PICTURE PORTION X

EP 0 804 029 A2

EP 0 804 029 A2

*Fig.  8A*

8 LINES

① ⟶ 1

② ⟶ 2   6/7

③   1/7   5/7 ⟶ 3

④   2/7   4/7 ⟶ 4

⑤   3/7   3/7 ⟶ 5

⑥   4/7   2/7 ⟶ 6

⑦   5/7   1/7 ⟶ 7

⑧   6/7

7 LINES

C. ( 8 × 7 )

*Fig.  8B*

$$[P1 \ P2 \ P3 \ P4 \ P5 \ P6 \ P7 \ P8] \begin{bmatrix} 1 & 0 & 0 & 0 & 0 & 0 & 0 \\ 0 & 6/7 & 0 & 0 & 0 & 0 & 0 \\ 0 & 1/7 & 5/7 & 0 & 0 & 0 & 0 \\ 0 & 0 & 2/7 & 4/7 & 0 & 0 & 0 \\ 0 & 0 & 0 & 3/7 & 3/7 & 0 & 0 \\ 0 & 0 & 0 & 0 & 4/7 & 5/7 & 0 \\ 0 & 0 & 0 & 0 & 0 & 2/7 & 1/7 \\ 0 & 0 & 0 & 0 & 0 & 0 & 6/7 \end{bmatrix} = [P''1 \ P''2 \ P''3 \ P''4 \ P''5 \ P''6 \ P''7]$$

EP 0 804 029 A2

## Fig. 9A

$A \times C = R\ (10 \times 7)$

$M\ (1 \times 10)$

$[M1\ M2\ M3\ M4\ M5\ M6\ M7\ M8\ M9\ M10]$

$$\begin{bmatrix} R11 & R12 & R13 & R14 & R15 & R16 & R17 \\ R21 & R22 & R23 & R24 & R25 & R26 & R27 \\ R31 & R32 & R33 & R34 & R35 & R36 & R37 \\ R41 & R42 & R43 & R44 & R45 & R46 & R47 \\ R51 & R52 & R53 & R54 & R55 & R56 & R57 \\ R61 & R62 & R63 & R64 & R65 & R66 & R67 \\ R71 & R72 & R73 & R74 & R75 & R76 & R77 \\ R81 & R82 & R83 & R84 & R85 & R86 & R87 \\ R91 & R92 & R93 & R94 & R95 & R96 & R97 \\ Ra1 & Ra2 & Ra3 & Ra4 & Ra5 & Ra6 & Ra7 \end{bmatrix}$$

$H\ (1 \times 3)$

$+\ [H1\ H2\ H3]$

$B \times C = S\ (3 \times 7)$

$$\begin{bmatrix} S11 & S12 & S13 & S14 & S15 & S16 & S17 \\ S21 & S22 & S23 & S24 & S25 & S26 & S27 \\ S31 & S32 & S33 & S34 & S35 & S36 & S37 \end{bmatrix}$$

$P'\ (1 \times 7)$

$= [P'1\ P'2\ P'3\ P'4\ P'5\ P'6\ P'7]$

## Fig. 9B

PIXEL

MULTIPLEX HELPER SIGNAL

MULTIPLEX HELPER SIGNAL

SCANNING LINE

Fig. 10

## Fig. 11B

EXISTING RECEIVER

## Fig. 11A

PALplus RECEIVER

## Fig. 15A

FREQUENCY

fsc = 4. 43 MHz

## Fig. 15B

(0. 5MHz)   (5MHz)   FREQUENCY

fsc = 4. 43 MHz

## Fig. 12

VIDEO SIGNAL OF MAIN PICTURE PORTION

HELPER SIGNAL

WHITE LEVEL

BLANKING AND BLACK LEVEL

PAL COLOR BURST

SYNC LEVEL

Fig. 13A

HELPER SIGNAL H
NON-PICTURE PORTION W
MAIN PICTURE PORTION X
NON-PICTURE PORTION W
HELPER SIGNAL H

Fig. 13B

HELPER SIGNAL H

Fig. 13C

## Fig. 14

EP 0 804 029 A2

lineNo.

| lineNo. | | | lineNo. | |
|---|---|---|---|---|
| 23 | IDENTIFICATION CONTROL SIGNAL WSS | | | lineNo. |
| 24 – 59 | HELPER SIGNAL H (36 LINES) | NON-PICTURE PORTION W  336 – 371 | | HELPER SIGNAL H (36 LINES) |
| 60 – 274 | MAIN PICTURE PORTION SIGNAL (215 LINES) (COMPOSITE VIDEO SIGNAL CVBS) | 372 MAIN PICTURE PORTION X 586 | | MAIN PICTURE PORTION SIGNAL (215 LINES) (COMPOSITE VIDEO SIGNAL CVBS) |
| 275 – 310 | HELPER SIGNAL H (36 LINES) | NON-PICTURE PORTION W  587 – 622 | | HELPER SIGNAL H (36 LINES) |
| | 1st FIELD (A FIELD) | | | 2nd FIELD (B FIELD) |

## Fig. 16

PALplus
COMPOSITE
VIDEO SIGNAL

CVBS

300

**COLOR DECODER**
301

UV

CVBS

**COLOR PLUS PROC. AND 3-D Y/C SEP.**
305

UV

Y

H

**CHROMINANCE SIG. SCANNING LINE INTERPOLATING PROCESS**
306

**LUMINANCE SIG. SCANNING LINE INTERPOLATING PROCESS**
307

$UV_F$

$Y_H$

**FORMAT CONVERTING (576 LINES → 504 LINES)**
308

$2UV_F$

$2Y_H$

**IMAGE DISPLAY PROC. UNIT**
309

2R

2G

2B

**DISPLAY DEVICE**
310

**HELPER SIGNAL PROC. UNIT**
302

**TIMING GENERATOR**
303

**MODE DECODER**
304

FILM/CAMERA

EP 0 804 029 A2

# Fig. 17

INPUT UNIT IN — 320

Y, H → INPUT UNIT IN → Y+H

1-FIELD DELAY FM — 321

A FIELD RAM — 323

307

B FIELD RAM — 322

C BRANCH

VERTICAL FILTERING PROCESSING UNIT — 324

$Y_H$ — 325

EP 0 804 029 A2

## Fig. 18A

## Fig. 18B

## Fig. 18C

MAIN PICTURE PORTION

Fig. 19A INPUT SIGNAL

1A | 1B | 2A | 2B | 3A | 3B

UPPER HELPER
LOWER HELPER

WRITE INTO B FIELD RAM | WRITE INTO B FIELD RAM | WRITE INTO B FIELD RAM

Fig. 19B OUTPUT OF 1-FIELD DELAY

1A | 1B | 2A | 2B | 3A | 3B

WRITE INTO A FIELD RAM | WRITE INTO A FIELD RAM | WRITE INTO A FIELD RAM

MAIN PICTURE PORTION OUTPUT

Fig. 19C OUTPUT OF A FIELD RAM (READ)

1A | 1A | 2A | 2A | 3A | 3A

UPPER HELPER    LOWER HELPER

Fig. 19D OUTPUT OF B FIELD RAM (READ)

1B | 1B | 2B | 2B | 3B | 3B

# Fig. 20

Fig. 21A

Fig. 21B

Fig. 21C

Fig. 21D

Fig. 21E

1 FIELD

| 1A | 1B | 2A | 2B | 3A | 3B |

INDICATES EFFECTIVE FIELD

EP 0 804 029 A2

# Fig. 22

B FIELD LOW BAND LUMINANCE SIGNAL

CVBS

H

UV

CVBS+H

INPUT UNIT

326

331

1 FIELD DELAY FM

332

333

334

HIGH BAND LUMINANCE SIGNAL

335

k

337

ALIASING REMOVING FILTER

338

RAM

322

325

324

VF

LUMINANCE SIGNAL OUTPUT

339

323

RAM

A FIELD LOW BAND LUMINANCE SIGNAL

k

COLOR DEFFERENCE OUTPUT SWITCH

353

352a

B FIELD COLOR DEFFERENCE SIGNAL

360

RAM

363

351

1 FIELD DELAY FM

IFA

352b

352

VF

COLOR DEFFERENCE SIGNAL OUTPUT

IFA

A FIELD COLOR DEFFERENCE SIGNAL

361

RAM

352c

362

336

MOTION DETECTING

COLOR DEFFERENCE SWITCHING SIGNAL

1-FRAME DELAY

354

EP 0 804 029 A2

# Fig. 23

# Fig. 24